# EUROPEAN PATENT APPLICATION

(11) **EP 4 734 646 A1**
(43) Date of publication of application: **29.04.2026**
(21) Application number: 24870653.3
(22) Date of filing: 23.09.2024
(51) Int. Cl.: H04W 72/56, H04B 17/345

(54) **METHOD FOR NETWORK COEXISTENCE, ELECTRONIC DEVICE, AND COMPUTER STORAGE MEDIUM**

(30) Priority: 26.09.2023 CN 202311257476
(71) Applicant: Huawei Technologies Co., Ltd., Shenzhen, Guangdong 518129 (CN)
(72) Inventor: YANG, Yuxin, Shenzhen, Guangdong 518129 (CN); ZHU, Jiebao, Shenzhen, Guangdong 518129 (CN); WEN, Xiaolin, Shenzhen, Guangdong 518129 (CN)
(74) Representative: Grünecker Patent- und Rechtsanwälte PartG mbB
(86) International application number: PCT/CN2024/120392
(87) International publication number: WO 2025/067109

(57) **Abstract**

This application provides a network coexistence method, an electronic device, and a computer storage medium. The electronic device includes a first communication chip and a second communication chip. The first communication chip is an ultra-wideband UWB chip, and the second communication chip is a cellular communication chip or a wireless fidelity Wi-Fi chip. The electronic device obtains first status information of the first communication chip and second status information of the second communication chip; when operating statuses of both the first communication chip and the second communication chip are a communication state, determines a first communication solution based on the first status information and the second status information; and then indicates the first communication chip and the second communication chip to operate based on the first communication solution. In other words, a communication solution used in a scenario in which a plurality of communication networks coexist is obtained through comprehensive consideration based on status information of a plurality of communication chips. Therefore, in the communication solution, there is no problem of mutual impact and interference between communication networks, effectively improving communication effect.

## Description

This application claims priority to Chinese Patent Application No. 202311257476.9, filed with the China National Intellectual Property Administration on September 26, 2023, and entitled "NETWORK COEXISTENCE METHOD, ELECTRONIC DEVICE, AND COMPUTER STORAGE MEDIUM", which is incorporated herein by reference in its entirety.

### TECHNICAL FIELD

This application relates to the field of computer technologies, and in particular, to a network coexistence method, an electronic device, and a computer storage medium.

### BACKGROUND

With popularization of an ultra-wideband (ultra-wideband, UWB) ecosystem, a plurality of communication chips such as a UWB chip, a wireless fidelity (Wi-Fi) chip, and a cellular communication chip are all integrated into an increasing quantity of electronic devices (for example, smartphones, smartwatches, vehicle-mounted devices, and large-screen devices). However, when the electronic device simultaneously uses the plurality of communication chips for communication, there may be the following problems: First, because commonly used frequency bands for UWB, Wi-Fi, and cellular communication are adjacent or overlap, there may be co-channel interference, adjacent-channel interference, harmonic interference, and the like when a UWB network and a cellular communication network or a Wi-Fi network coexist. Second, the UWB chip has a weak anti-interference capability. Therefore, when the Wi-Fi chip or the cellular communication chip transmits an uplink signal, receiving of a downlink signal by the UWB chip may be affected. In other words, when a plurality of communication networks coexist, the plurality of communication networks affect each other, resulting in poor communication effect.

### SUMMARY

This application discloses a network coexistence method, an electronic device, and a computer storage medium, to resolve a problem of mutual impact between communication networks in a scenario in which a plurality of communication networks coexist, and effectively improve communication effect of an electronic device.

According to a first aspect, this application provides an electronic device, including an ultra-wideband UWB chip, a wireless fidelity Wi-Fi chip, and a cellular communication chip. The UWB chip is connected to the Wi-Fi chip, the cellular communication chip is connected to the Wi-Fi chip, and the UWB chip and the cellular communication chip are bridged through the Wi-Fi chip. The UWB chip is configured to send first status information of the UWB chip to the Wi-Fi chip. The Wi-Fi chip is configured to send the first status information to the cellular communication chip after receiving the first status information sent by the UWB chip. The Wi-Fi chip is further configured to send second status information of the Wi-Fi chip to the cellular communication chip. The cellular communication chip is configured to obtain third status information of the cellular communication chip. The first status information, the second status information, and the third status information include an operating status, an operating frequency band, and a type of a bearer service. The cellular communication chip is further configured to: when operating statuses of both the UWB chip and the cellular communication chip are a communication state, determine a first communication solution based on the first status information and the third status information, and indicate the UWB chip and/or the cellular communication chip to operate based on the first communication solution. Alternatively, the cellular communication chip is further configured to: when operating statuses of both the UWB chip and the Wi-Fi chip are a communication state, determine a second communication solution based on the first status information and the second status information, and indicate the UWB chip and/or the Wi-Fi chip to operate based on the second communication solution.

In some examples, that the UWB chip and the cellular communication chip are bridged through the Wi-Fi chip includes: The UWB chip and the Wi-Fi chip are directly connected through an independent interface, the cellular communication chip and the Wi-Fi chip are directly connected through an independent interface, the UWB chip and the cellular communication chip are not directly connected through an independent interface, and the UWB chip and the cellular communication chip transmit information through relaying by the Wi-Fi chip.

In the foregoing method, the UWB chip and the cellular communication chip may be bridged through the Wi-Fi chip, and the UWB chip may send the first status information to the cellular communication chip through the Wi-Fi chip. In this way, signaling exchange between the UWB chip and the cellular communication chip can be implemented without adding a hardware pin between the UWB chip and the cellular communication chip. Therefore, the cellular communication chip may determine, based on the first status information sent by the Wi-Fi chip, the second status information of the Wi-Fi chip that is sent by the Wi-Fi chip, and the third status information of the cellular communication chip, whether a current scenario is a coexistence scenario of a UWB network and a Wi-Fi network/cellular communication network, and determine a communication solution in the coexistence scenario, so that a corresponding communication chip operates based on the communication solution. In other words, a communication solution used in a coexistence scenario is obtained through comprehensive consideration based on status information of all communication chips. In this communication solution, there is no problem of mutual impact and interference between communication networks, effectively improving communication effect of the electronic device.

In a possible implementation, the first communication solution is any one of the following: adjusting the operating status of the UWB chip to a non-communication state, adjusting the operating status of the cellular communication chip to a non-communication state, reducing transmit power of the cellular communication chip, the UWB chip and the cellular communication chip performing communication processes based on a time division strategy, switching an operating frequency band of the UWB chip, and switching an operating frequency band of the cellular communication chip; and the second communication solution is any one of the following: adjusting the operating status of the UWB chip to a non-communication state, adjusting the operating status of the Wi-Fi chip to a non-communication state, reducing transmit power of the Wi-Fi chip, the UWB chip and the Wi-Fi chip performing communication processes based on a time division strategy, switching an operating frequency band of the UWB chip, and switching an operating frequency band of the Wi-Fi chip.

In the foregoing method, various communication solutions are used in a coexistence scenario, and may be applied to a wide range of coexistence scenarios. Therefore, a problem of mutual impact between communication networks can be resolved in various coexistence scenarios, effectively improving communication effect of the electronic device.

In a possible implementation, the operating status includes a transmit state, a receive state, a sleep state, and a power-off state, there is a mutual transition between the transmit state, the receive state, and the sleep state, there is a mutual transition between the sleep state and the power-off state, the communication state includes the transmit state and the receive state, and the non-communication state is the sleep state.

In the foregoing method, a communication solution used in a coexistence scenario may include adjusting an operating status of a communication chip to a non-communication state, so that the other coexisting communication chip performs normal communication. The non-communication state may be the sleep state instead of the power-off state. Therefore, a communication chip in the sleep state may subsequently quickly resume the communication state, or may quickly enter the power-off state. Efficiency of communication solution switching is higher, and device availability is better.

This is not limited to the foregoing implementation. In another possible implementation, the non-communication state is the power-off state. It may be understood that in this way, power consumption of the electronic device can be reduced, so that the electronic device provides more resources to the other communication chip for use.

In a possible implementation, determining the first communication solution based on the first status information and the third status information, and indicating the UWB chip and/or the cellular communication chip to operate based on the first communication solution includes: determining, based on a first operating frequency band in the first status information and a second operating frequency band in the third status information, whether there is communication interference between the UWB chip on the first operating frequency band and the cellular communication chip on the second operating frequency band; when there is communication interference between the UWB chip on the first operating frequency band and the cellular communication chip on the second operating frequency band, sending a first instruction to the Wi-Fi chip, so that the Wi-Fi chip sends the first instruction to the UWB chip, where the first instruction indicates the UWB chip to switch the operating frequency band; after the UWB chip successfully switches to a third operating frequency band, determining whether there is communication interference between the UWB chip on the third operating frequency band and the cellular communication chip on the second operating frequency band; and when there is communication interference between the UWB chip on the third operating frequency band and the cellular communication chip on the second operating frequency band, or when the UWB chip fails to switch the operating frequency band, determining the first communication solution based on a preset first service priority, a type of a first service in the first status information, and a type of a second service in the third status information; or when there is no communication interference between the UWB chip on the third operating frequency band and the cellular communication chip on the second operating frequency band, determining that the first communication solution is switching the operating frequency band of the UWB chip.

In the foregoing method, when the operating statuses of both the UWB chip and the cellular communication chip are the communication state, the electronic device may first determine whether there is communication interference between the two chips. If there is communication interference, the electronic device may attempt to switch the operating frequency band of the UWB chip, and when the switching fails or there is still communication interference, obtain another communication solution with reference to a service priority, that is, a communication mode in which the UWB network and the cellular communication network coexist and do not affect each other is preferentially considered, to ensure, as much as possible, that communication services coexisting in the electronic device can be normally executed. This processing manner better meets an actual requirement of a user. In addition, choosing to switch the operating frequency band of the UWB chip instead of switching the operating frequency band of the cellular communication chip can avoid the following problems: complexity of switching the operating frequency band of the cellular communication chip is high, and even if the switching succeeds, a cellular service may be abnormal (for example, switching from an operating frequency band of a fifth generation 5G mobile communication technology to an operating frequency band of a second generation mobile communication technology), thereby further ensuring normal execution of a communication service of the electronic device, and reducing processing pressure of the electronic device.

In a possible implementation, determining the first communication solution based on the preset first service priority, the type of the first service in the first status information, and the type of the second service in the third status information includes: determining a priority of the first service and a priority of the second service based on the first service priority; and when the priority of the first service is higher than the priority of the second service, determining that the first communication solution is adjusting the operating status of the cellular communication chip to the non-communication state, reducing the transmit power of the cellular communication chip, or switching the operating frequency band of the cellular communication chip; when the priority of the first service is lower than the priority of the second service, determining that the first communication solution is adjusting the operating status of the UWB chip to the non-communication state; or when the priority of the first service is the same as the priority of the second service, determining that the first communication solution is the UWB chip and the cellular communication chip performing communication processes based on the time division strategy.

In the foregoing method, when the operating statuses of both the UWB chip and the cellular communication chip are the communication state, the electronic device may compare priorities of a UWB service and a cellular communication service, and determine a communication solution based on a comparison result. The communication solution determined in this way can ensure performance of a service with a higher priority, and reduce or avoid impact on a service with a lower priority.

In a possible implementation, in descending order of priorities, the first service priority includes a cellular negotiation service and a cellular call service, a UWB negotiation phase, a cellular sensitive service, and a UWB ranging/angle measurement service. The cellular negotiation service includes cellular authentication, roaming, and a dynamic host configuration protocol DHCP, and the cellular sensitive service includes a game service, a live broadcast service, a payment service, and a red packet service. Determining the first communication solution based on the preset first service priority, the type of the first service in the first status information, and the type of the second service in the third status information includes: determining whether the second service is the cellular negotiation service or the cellular call service; and when the second service is the cellular negotiation service or the cellular call service, determining that the first communication solution is adjusting the operating status of the UWB chip to the non-communication state; or when the second service is not the cellular negotiation service or the cellular call service, determining whether the first service is the UWB negotiation phase; and when the first service is the UWB negotiation phase, determining that the first communication solution is adjusting the operating status of the cellular communication chip to the non-communication state, or reducing the transmit power of the cellular communication chip; or when the first service is not the UWB negotiation phase, determining whether the second service is the cellular sensitive service; and when the second service is the cellular sensitive service, determining that the first communication solution is adjusting the operating status of the UWB chip to the non-communication state; or when the second service is not the cellular sensitive service, determining whether the first service is the UWB ranging/angle measurement service; and when the first service is the UWB ranging/angle measurement service, determining that the first communication solution is the UWB chip and the cellular communication chip performing communication processes based on the time division strategy; or when the first service is not the UWB ranging/angle measurement service, determining that the first communication solution is switching the operating frequency band of the cellular communication chip.

It may be understood that a fallback solution of the first communication solution is switching the operating frequency band of the cellular communication chip. This is not limited to the foregoing implementation. In another possible implementation, when the first service is not the UWB ranging/angle measurement service, it is determined that the first communication solution is the UWB chip and the cellular communication chip performing communication processes based on the time division strategy, that is, a fallback solution of the first communication solution is the UWB chip and the cellular communication chip performing communication processes based on the time division strategy.

In the foregoing method, when determining the first communication solution based on a preset service priority, the electronic device may consider importance of a service as closely as possible based on an actual situation, to preferentially ensure that an important service (that is, a service with a higher priority) is not affected, thereby achieving higher availability and effectively improving user experience.

In a possible implementation, determining the second communication solution based on the first status information and the second status information, and indicating the UWB chip and/or the Wi-Fi chip to operate based on the second communication solution includes: determining whether the first operating frequency band in the first status information is a channel 5; when the first operating frequency band is the channel 5, determining, based on the first operating frequency band and a fourth operating frequency band in the second status information, whether there is communication interference between the UWB chip on the first operating frequency band and the Wi-Fi chip on the fourth operating frequency band; when there is communication interference between the UWB chip on the first operating frequency band and the Wi-Fi chip on the fourth operating frequency band, sending a second instruction to the Wi-Fi chip, where the second instruction indicates the Wi-Fi chip to switch to a fifth operating frequency band, and there is no communication interference between the UWB chip on the first operating frequency band and the Wi-Fi chip on the fifth operating frequency band; and when the Wi-Fi chip fails to switch to the fifth operating frequency band, determining the second communication solution based on a preset second service priority, the type of the first service in the first status information, and a type of a third service in the second status information; or when the Wi-Fi chip successfully switches to the fifth operating frequency band, determining that the second communication solution is switching the operating frequency band of the Wi-Fi chip.

In the foregoing method, when the operating statuses of both the UWB chip and the Wi-Fi chip are the communication state, the electronic device may first determine whether the operating frequency band of the UWB chip is the channel 5 (when the operating frequency band is currently not the channel 5, there is no communication interference between the two chips), and if a determining result is yes, further determine whether there is communication interference between the two chips. If there is communication interference, the electronic device may attempt to switch the operating frequency band of the Wi-Fi chip, and when the switching fails, obtain another communication solution with reference to a service priority, that is, a communication mode in which the UWB network and the Wi-Fi network coexist and do not affect each other is preferentially considered, to ensure, as much as possible, that communication services coexisting in the electronic device can be normally executed. This processing manner better meets an actual requirement of a user.

In a possible implementation, determining the second communication solution based on the preset second service priority, the type of the first service in the first status information, and the type of the third service in the second status information includes: determining the priority of the first service and a priority of the third service based on the second service priority; and when the priority of the first service is higher than the priority of the third service, determining that the second communication solution is adjusting the operating status of the Wi-Fi chip to the non-communication state, or reducing the transmit power of the Wi-Fi chip; when the priority of the first service is lower than the priority of the third service, determining that the second communication solution is adjusting the operating status of the UWB chip to the non-communication state; or when the priority of the first service is the same as the priority of the third service, determining that the second communication solution is the UWB chip and the Wi-Fi chip performing communication processes based on the time division strategy.

In the foregoing method, when the operating statuses of both the UWB chip and the Wi-Fi chip are the communication state, the electronic device may compare priorities of a UWB service and a Wi-Fi service, and determine a communication solution based on a comparison result. The communication solution determined in this way can ensure performance of a service with a higher priority, and reduce or avoid impact on a service with a lower priority.

In a possible implementation, in descending order of priorities, the second service priority includes a Wi-Fi negotiation service, a UWB negotiation phase, and a Wi-Fi sensitive service. The Wi-Fi negotiation service includes Wi-Fi authentication, roaming, and a dynamic host configuration protocol DHCP, and the Wi-Fi sensitive service includes a game service, a live broadcast service, a payment service, and a red packet service. Determining the second communication solution based on the preset second service priority, the type of the first service in the first status information, and the type of the third service in the second status information includes: determining whether the third service is the Wi-Fi negotiation service; and when the third service is the Wi-Fi negotiation service, determining that the second communication solution is adjusting the operating status of the UWB chip to the non-communication state; or when the third service is not the Wi-Fi negotiation service, determining whether the first service is the UWB negotiation phase; and when the first service is the UWB negotiation phase, determining that the second communication solution is adjusting the operating status of the Wi-Fi chip to the non-communication state, or reducing the transmit power of the Wi-Fi chip; or when the first service is not the UWB negotiation phase, determining whether the third service is the Wi-Fi sensitive service; and when the third service is the Wi-Fi sensitive service, determining that the second communication solution is adjusting the operating status of the UWB chip to the non-communication state; or when the third service is not the Wi-Fi sensitive service, determining that the second communication solution is the UWB chip and the cellular communication chip performing communication processes based on the time division strategy.

It may be understood that a fallback solution of the second communication solution is the UWB chip and the cellular communication chip performing communication processes based on the time division strategy.

In the foregoing method, when determining the first communication solution based on a preset service priority, the electronic device may consider importance of a service as closely as possible based on an actual situation, to preferentially ensure that an important service (that is, a service with a higher priority) is not affected, thereby achieving higher availability and effectively improving user experience.

In a possible implementation, indicating the UWB chip and/or the cellular communication chip to operate based on the first communication solution includes: when the first communication solution is adjusting the operating status of the UWB chip to the non-communication state, sending a third instruction to the Wi-Fi chip, so that the Wi-Fi chip sends the third instruction to the UWB chip, where the third instruction indicates the UWB chip to switch the operating status to the sleep state; when the first communication solution is adjusting the operating status of the cellular communication chip to the non-communication state, switching the operating status of the cellular communication chip to the sleep state; when the first communication solution is reducing the transmit power of the cellular communication chip, reducing the transmit power of the cellular communication chip; when the first communication solution is the UWB chip and the cellular communication chip performing communication processes based on the time division strategy, sending a fourth instruction to the Wi-Fi chip, so that the Wi-Fi chip sends the fourth instruction to the UWB chip, where the fourth instruction indicates that an operating time period of the UWB chip is a first time slice, the first time slice and a second time slice do not overlap each other, and the second time slice is an operating time period of the cellular communication chip; when the first communication solution is switching the operating frequency band of the UWB chip, sending a fifth instruction to the Wi-Fi chip, so that the Wi-Fi chip sends the fifth instruction to the UWB chip, where the fifth instruction indicates the UWB chip to switch the operating frequency band; or when the first communication solution is switching the operating frequency band of the cellular communication chip, switching the operating frequency band of the cellular communication chip.

In a possible implementation, indicating the UWB chip and/or the Wi-Fi chip to operate based on the second communication solution includes: when the second communication solution is adjusting the operating status of the UWB chip to the non-communication state, sending a sixth instruction to the Wi-Fi chip, so that the Wi-Fi chip sends the sixth instruction to the UWB chip, where the sixth instruction indicates the UWB chip to switch the operating status to the sleep state; when the second communication solution is adjusting the operating status of the Wi-Fi chip to the non-communication state, sending a seventh instruction to the Wi-Fi chip, where the seventh instruction indicates the Wi-Fi chip to switch the operating status to the sleep state; when the second communication solution is reducing the transmit power of the Wi-Fi chip, sending an eighth instruction to the Wi-Fi chip, where the eighth instruction indicates the Wi-Fi chip to reduce the transmit power; when the second communication solution is the UWB chip and the Wi-Fi chip performing communication processes based on the time division strategy, sending a ninth instruction and a tenth instruction to the Wi-Fi chip, so that the Wi-Fi chip sends the ninth instruction to the UWB chip, where the ninth instruction indicates that the operating time period of the UWB chip is a third time slice, the tenth instruction indicates that an operating time period of the Wi-Fi chip is a fourth time slice, and the third time slice and the fourth time slice do not overlap each other; when the second communication solution is switching the operating frequency band of the UWB chip, sending an eleventh instruction to the Wi-Fi chip, so that the Wi-Fi chip sends the eleventh instruction to the UWB chip, where the eleventh instruction indicates the UWB chip to switch the operating frequency band; or when the second communication solution is switching the operating frequency band of the Wi-Fi chip, sending a twelfth instruction to the Wi-Fi chip, where the twelfth instruction indicates the Wi-Fi chip to switch the operating frequency band.

In the foregoing method, when the determined first communication solution or second communication solution requires adjustment of an operating mode of the UWB chip, the cellular communication chip may send a corresponding instruction to the UWB chip through the Wi-Fi chip. In this way, signaling exchange between the UWB chip and the cellular communication chip can be implemented without adding a hardware pin between the UWB chip and the cellular communication chip. This achieves a smaller increase in complexity of chip design and implementation and a smaller increase in costs, an area, and power consumption of the chip (especially when a hardware interface is added to the cellular communication chip, complexity, an increase in costs, an increase in an area, and an increase in power consumption are very high).

According to a second aspect, this application provides a network coexistence method, applied to an electronic device. The electronic device includes a first communication chip and a second communication chip, and the first communication chip is an ultra-wideband UWB chip. The method includes: obtaining first status information of the first communication chip, and obtaining second status information of the second communication chip, where the first status information and the second status information include an operating status, an operating frequency band, and a type of a bearer service; when operating statuses of both the first communication chip and the second communication chip are a communication state, determining a first communication solution based on the first status information and the second status information; and indicating the first communication chip and/or the second communication chip to operate based on the first communication solution.

In a possible implementation, the second communication chip is a cellular communication chip, a wireless fidelity Wi-Fi chip, a Bluetooth BT chip, an infrared IR chip, a near field communication NFC chip, a global navigation satellite system GNSS chip, or a frequency modulation FM chip.

In the foregoing method, the electronic device may obtain status information of the UWB chip and status information of another communication chip, determine, based on the obtained status information, whether a current scenario is a coexistence scenario of a UWB network and another communication network, and determine a communication solution in the coexistence scenario, so that a corresponding communication chip operates based on the communication solution. In other words, a communication solution used in a coexistence scenario is obtained through comprehensive consideration based on status information of all communication chips. In this communication solution, there is no problem of mutual impact and interference between communication networks, effectively improving communication effect of the electronic device.

In a possible implementation, the first communication solution is any one of the following: adjusting the operating status of the first communication chip to a non-communication state, adjusting the operating status of the second communication chip to a non-communication state, reducing transmit power of the second communication chip, the first communication chip and the second communication chip performing communication processes based on a time division strategy, switching an operating frequency band of the first communication chip, and switching an operating frequency band of the second communication chip.

In the foregoing method, various communication solutions are used in a coexistence scenario, and may be applied to a wide range of coexistence scenarios. Therefore, a problem of mutual impact between communication networks can be resolved in various coexistence scenarios, effectively improving communication effect of the electronic device.

In a possible implementation, the operating status includes a transmit state, a receive state, a sleep state, and a power-off state, there is a mutual transition between the transmit state, the receive state, and the sleep state, there is a mutual transition between the sleep state and the power-off state, the communication state includes the transmit state and the receive state, and the non-communication state is the sleep state.

In the foregoing method, a communication solution used in a coexistence scenario may include adjusting an operating status of a communication chip to a non-communication state, so that the other coexisting communication chip performs normal communication. The non-communication state may be the sleep state instead of the power-off state. Therefore, a communication chip in the sleep state may subsequently quickly resume the communication state, or may quickly enter the power-off state. Efficiency of communication solution switching is higher, and device availability is better.

This is not limited to the foregoing implementation. In another possible implementation, the non-communication state is the power-off state. It may be understood that in this way, power consumption of the electronic device can be reduced, so that the electronic device provides more resources to the other communication chip for use.

In a possible implementation, determining the first communication solution based on the first status information and the second status information includes: determining, based on a first operating frequency band in the first status information and a second operating frequency band in the second status information, whether there is communication interference between the first communication chip on the first operating frequency band and the second communication chip on the second operating frequency band; and when there is communication interference between the first communication chip on the first operating frequency band and the second communication chip on the second operating frequency band, determining the first communication solution based on the first status information and the second status information.

In the foregoing method, when the operating statuses of both the UWB chip and the another communication chip are the communication state, the electronic device may first determine whether there is communication interference between the two chips, and if there is communication interference, obtain another communication solution, to avoid poorer experience caused by service adjustment during normal service execution, and avoid consumption of unnecessary processing resources, thereby achieving higher functional availability.

In a possible implementation, determining the first communication solution based on the first status information and the second status information includes: determining a priority of a first service and a priority of a second service based on a preset first service priority, a type of the first service in the first status information, and a type of the second service in the second status information; and when the priority of the first service is higher than the priority of the second service, determining that the first communication solution is adjusting the operating status of the second communication chip to the non-communication state, reducing the transmit power of the second communication chip, or switching the operating frequency band of the second communication chip; when the priority of the first service is lower than the priority of the second service, determining that the first communication solution is adjusting the operating status of the first communication chip to the non-communication state, or switching the operating frequency band of the first communication chip; or when the priority of the first service is the same as the priority of the second service, determining that the first communication solution is the first communication chip and the second communication chip performing communication processes based on the time division strategy.

In the foregoing method, when the operating statuses of both the UWB chip and the another communication chip are the communication state, the electronic device may compare priorities of a UWB service and another communication service, and determine a communication solution based on a comparison result. The communication solution determined in this way can ensure performance of a service with a higher priority, and reduce or avoid impact on a service with a lower priority.

In a possible implementation, the second communication chip is a cellular communication chip. Determining the first communication solution based on the first status information and the second status information includes: determining, based on the first operating frequency band in the first status information and a third operating frequency band in the second status information, whether there is communication interference between the first communication chip on the first operating frequency band and the second communication chip on the third operating frequency band; when there is communication interference between the first communication chip on the first operating frequency band and the second communication chip on the third operating frequency band, switching the operating frequency band of the first communication chip; after the operating frequency band of the first communication chip is successfully switched to a fourth operating frequency band, determining whether there is communication interference between the first communication chip on the fourth operating frequency band and the second communication chip on the third operating frequency band; and when there is communication interference between the first communication chip on the fourth operating frequency band and the second communication chip on the third operating frequency band, or when switching of the operating frequency band of the first communication chip fails, determining the first communication solution based on a preset second service priority, the type of the first service in the first status information, and a type of a third service in the second status information; or when there is no communication interference between the first communication chip on the fourth operating frequency band and the second communication chip on the third operating frequency band, determining that the first communication solution is switching the operating frequency band of the first communication chip.

In the foregoing method, when the operating statuses of both the UWB chip and the cellular communication chip are the communication state, the electronic device may first determine whether there is communication interference between the two chips. If there is communication interference, the electronic device may attempt to switch the operating frequency band of the UWB chip, and when the switching fails or there is still communication interference, obtain another communication solution with reference to a service priority, that is, a communication mode in which the UWB network and a cellular communication network coexist and do not affect each other is preferentially considered, to ensure, as much as possible, that communication services coexisting in the electronic device can be normally executed. This processing manner better meets an actual requirement of a user. In addition, choosing to switch the operating frequency band of the UWB chip instead of switching the operating frequency band of the cellular communication chip can avoid the following problems: complexity of switching the operating frequency band of the cellular communication chip is high, and even if the switching succeeds, a cellular service may be abnormal (for example, switching from an operating frequency band of a fifth generation 5G mobile communication technology to an operating frequency band of a second generation mobile communication technology), thereby further ensuring normal execution of a communication service of the electronic device, and reducing processing pressure of the electronic device.

In a possible implementation, the second communication chip is a wireless fidelity Wi-Fi chip, a Bluetooth BT chip, an infrared IR chip, a near field communication NFC chip, a global navigation satellite system GNSS chip, or a frequency modulation FM chip. Determining the first communication solution based on the first status information and the second status information includes: determining whether the first operating frequency band in the first status information is a channel 5; when the first operating frequency band is the channel 5, determining, based on the first operating frequency band in the first status information and a fifth operating frequency band in the second status information, whether there is communication interference between the first communication chip on the first operating frequency band and the second communication chip on the fifth operating frequency band; when there is communication interference between the first communication chip on the first operating frequency band and the second communication chip on the fifth operating frequency band, switching the operating frequency band of the second communication chip; and when switching of the operating frequency band of the second communication chip to a sixth operating frequency band fails, determining the first communication solution based on a preset third service priority, the type of the first service in the first status information, and a type of a fourth service in the second status information; or when the operating frequency band of the second communication chip is successfully switched to a sixth operating frequency band, determining that the first communication solution is switching the operating frequency band of the second communication chip, where there is no communication interference between the first communication chip on the first operating frequency band and the second communication chip on the sixth operating frequency band.

In the foregoing method, when the operating statuses of both the UWB chip and the another communication chip are the communication state, the electronic device may first determine whether the operating frequency band of the UWB chip is the channel 5 (when the operating frequency band is currently not the channel 5, there is no communication interference between the two chips), and if a determining result is yes, further determine whether there is communication interference between the two chips. If there is communication interference, the electronic device may attempt to switch the operating frequency band of the another communication chip, and when the switching fails, obtain another communication solution with reference to a service priority, that is, a communication mode in which the UWB network and another communication network coexist and do not affect each other is preferentially considered, to ensure, as much as possible, that communication services coexisting in the electronic device can be normally executed. This processing manner better meets an actual requirement of a user.

In a possible implementation, the electronic device includes an arbitration module. The arbitration module is the first communication chip, the second communication chip, a third communication chip, or a host chip in the electronic device. The third communication chip is different from both the first communication chip and the second communication chip. Obtaining the first status information of the first communication chip includes: The arbitration module obtains the first status information. Obtaining the second status information of the second communication chip includes: The arbitration module obtains the second status information. Determining the first communication solution based on the first status information and the second status information includes: The arbitration module determines the first communication solution based on the first status information and the second status information. Indicating the first communication chip and/or the second communication chip to operate based on the first communication solution includes: The arbitration module indicates the first communication chip and/or the second communication chip to operate based on the first communication solution.

In the foregoing method, the arbitration module may be disposed in the electronic device. The arbitration module determines a communication solution used in a coexistence scenario, and indicates a corresponding communication chip to operate based on the communication solution. The arbitration module may be a communication chip in the electronic device, or may be the host chip in the electronic device. This is not specifically limited, and there is a wider range of application scenarios.

In a possible implementation, the arbitration module is a cellular communication chip, the first communication chip is connected to the second communication chip, and the arbitration module is connected to the second communication chip. That the arbitration module obtains the first status information includes: The first communication chip sends the first status information to the second communication chip, and the second communication chip sends the first status information to the arbitration module. That the arbitration module obtains the second status information includes: When the arbitration module is the second communication chip, the arbitration module monitors a current status, and obtains the second status information; or when the arbitration module is not the second communication chip, the second communication chip sends the second status information to the arbitration module.

In a possible implementation, the arbitration module is the first communication chip, the second communication chip is a cellular communication chip or a Wi-Fi chip, the first communication chip in the electronic device is connected to the Wi-Fi chip, and the cellular communication chip in the electronic device is connected to the Wi-Fi chip. That the arbitration module obtains the first status information includes: The arbitration module monitors a current status, and obtains the first status information. That the arbitration module obtains the second status information includes: When the second communication chip is a cellular communication chip, the second communication chip sends the second status information to the Wi-Fi chip, and the Wi-Fi chip sends the second status information to the arbitration module; or when the second communication chip is a Wi-Fi chip, the second communication chip sends the second status information to the arbitration module.

In the foregoing method, status information of the UWB chip or status information of the cellular communication chip may be transmitted between the UWB chip and the cellular communication chip through the second communication chip, that is, the UWB chip and the cellular communication chip may be bridged through the second communication chip. In this way, signaling exchange between the UWB chip and the cellular communication chip can be implemented without adding a hardware pin between the UWB chip and the cellular communication chip. This achieves a smaller increase in complexity of chip design and implementation and a smaller increase in costs, an area, and power consumption of the chip (especially when a hardware interface is added to the cellular communication chip, complexity, an increase in costs, an increase in an area, and an increase in power consumption are very high).

In a possible implementation, the arbitration module is a Wi-Fi chip, the second communication chip is a cellular communication chip or a Wi-Fi chip, the first communication chip in the electronic device is connected to the Wi-Fi chip, and the cellular communication chip in the electronic device is connected to the Wi-Fi chip. That the arbitration module obtains the first status information includes: The first communication chip sends the first status information to the arbitration module. That the arbitration module obtains the second status information includes: When the second communication chip is a cellular communication chip, the second communication chip sends the second status information to the arbitration module; or when the second communication chip is a Wi-Fi chip, the arbitration module monitors a current status, and obtains the second status information.

In the foregoing method, the arbitration module may be a Wi-Fi chip. Both the UWB chip and the cellular communication chip in the electronic device may be connected to and transmit information to the Wi-Fi chip, and there is no need to add a hardware pin between the UWB chip and the cellular communication chip. This achieves a smaller increase in complexity of chip design and implementation and a smaller increase in costs, an area, and power consumption of the chip.

In a possible implementation, the arbitration module is the host chip. That the arbitration module obtains the first status information includes: The first communication chip sends the first status information to the arbitration module. That the arbitration module obtains the second status information includes: The second communication chip sends the second status information to the arbitration module.

In the foregoing method, the arbitration module may be the host chip. Any communication chip in the electronic device may be connected to and transmit information to the host chip, and there is no need to add a hardware pin between the communication chips. This avoids an increase in complexity of chip design and implementation and avoids an increase in costs, an area, and power consumption of the chip.

In a possible implementation, indicating the first communication chip and/or the second communication chip to operate based on the first communication solution includes: When the first communication solution is adjusting the operating status of the first communication chip to the non-communication state, the arbitration module sends a first instruction to the second communication chip, and the second communication chip sends the first instruction to the first communication chip, where the first instruction indicates the first communication chip to switch the operating status to the sleep state; when the first communication solution is adjusting the operating status of the second communication chip to the non-communication state, and the arbitration module is not the second communication chip, the arbitration module sends a second instruction to the second communication chip, where the second instruction indicates the second communication chip to switch the operating status to the sleep state; when the first communication solution is reducing the transmit power of the second communication chip, and the arbitration module is not the second communication chip, the arbitration module sends a third instruction to the second communication chip, where the third instruction indicates the second communication chip to reduce the transmit power; when the first communication solution is the first communication chip and the second communication chip performing communication processes based on the time division strategy, the arbitration module sends a fourth instruction to the second communication chip, and the second communication chip sends the fourth instruction to the first communication chip, where the fourth instruction indicates that an operating time period of the first communication chip is a first time slice, the first time slice and a second time slice do not overlap each other, and the second time slice is an operating time period of the second communication chip; when the first communication solution is switching the operating frequency band of the first communication chip, the arbitration module sends a fifth instruction to the second communication chip, and the second communication chip sends the fifth instruction to the first communication chip, where the fifth instruction indicates the first communication chip to switch the operating frequency band; or when the first communication solution is switching the operating frequency band of the second communication chip, and the arbitration module is not the second communication chip, the arbitration module sends a sixth instruction to the second communication chip, where the sixth instruction indicates the second communication chip to switch the operating frequency band.

In a possible implementation, indicating the first communication chip and/or the second communication chip to operate based on the first communication solution includes: When the first communication solution is adjusting the operating status of the second communication chip to the non-communication state, and the second communication chip is a cellular communication chip, the arbitration module sends a seventh instruction to the Wi-Fi chip, and the Wi-Fi chip sends the seventh instruction to the second communication chip, where the seventh instruction indicates the second communication chip to switch the operating status to the sleep state; when the first communication solution is adjusting the operating status of the second communication chip to the non-communication state, and the second communication chip is a Wi-Fi chip, the arbitration module sends a seventh instruction to the second communication chip; when the first communication solution is reducing the transmit power of the second communication chip, and the second communication chip is a cellular communication chip, the arbitration module sends an eighth instruction to the Wi-Fi chip, and the Wi-Fi chip sends the eighth instruction to the second communication chip, where the eighth instruction indicates the second communication chip to reduce the transmit power; when the first communication solution is reducing the transmit power of the second communication chip, and the second communication chip is a Wi-Fi chip, the arbitration module sends an eighth instruction to the second communication chip; when the first communication solution is the first communication chip and the second communication chip performing communication processes based on the time division strategy, and the second communication chip is a cellular communication chip, the arbitration module sends a ninth instruction to the Wi-Fi chip, and the Wi-Fi chip sends the ninth instruction to the second communication chip, where the ninth instruction indicates that an operating time period of the second communication chip is a third time slice, the third time slice and a fourth time slice do not overlap each other, and the fourth time slice is an operating time period of the first communication chip; when the first communication solution is the first communication chip and the second communication chip performing communication processes based on the time division strategy, and the second communication chip is a Wi-Fi chip, the arbitration module sends a ninth instruction to the second communication chip; when the first communication solution is switching the operating frequency band of the second communication chip, and the second communication chip is a cellular communication chip, the arbitration module sends a tenth instruction to the Wi-Fi chip, and the Wi-Fi chip sends the tenth instruction to the second communication chip, where the tenth instruction indicates the second communication chip to switch the operating frequency band; or when the first communication solution is switching the operating frequency band of the second communication chip, and the second communication chip is a Wi-Fi chip, the arbitration module sends a tenth instruction to the second communication chip.

In a possible implementation, indicating the first communication chip and/or the second communication chip to operate based on the first communication solution includes: When the first communication solution is adjusting the operating status of the first communication chip to the non-communication state, the arbitration module sends an eleventh instruction to the first communication chip, where the eleventh instruction indicates the first communication chip to switch the operating status to the sleep state; when the first communication solution is adjusting the operating status of the second communication chip to the non-communication state, and the arbitration module is not the second communication chip, the arbitration module sends a twelfth instruction to the second communication chip, where the twelfth instruction indicates the second communication chip to switch the operating status to the sleep state; when the first communication solution is reducing the transmit power of the second communication chip, and the arbitration module is not the second communication chip, the arbitration module sends a thirteenth instruction to the second communication chip, where the thirteenth instruction indicates the second communication chip to reduce the transmit power; when the first communication solution is the first communication chip and the second communication chip performing communication processes based on the time division strategy, the arbitration module sends a fourteenth instruction to the first communication chip, where the fourteenth instruction indicates that an operating time period of the first communication chip is a fifth time slice, the fifth time slice and a sixth time slice do not overlap each other, and the sixth time slice is an operating time period of the second communication chip; when the first communication solution is switching the operating frequency band of the first communication chip, the arbitration module sends a fifteenth instruction to the first communication chip, where the fifteenth instruction indicates the first communication chip to switch the operating frequency band; or when the first communication solution is switching the operating frequency band of the second communication chip, and the arbitration module is not the second communication chip, the arbitration module sends a sixteenth instruction to the second communication chip, where the sixteenth instruction indicates the second communication chip to switch the operating frequency band.

In a possible implementation, indicating the first communication chip and/or the second communication chip to operate based on the first communication solution includes: When the first communication solution is adjusting the operating status of the first communication chip to the non-communication state, the arbitration module sends a seventeenth instruction to the first communication chip, where the seventeenth instruction indicates the first communication chip to switch the operating status to the sleep state; when the first communication solution is adjusting the operating status of the second communication chip to the non-communication state, the arbitration module sends an eighteenth instruction to the second communication chip, where the eighteenth instruction indicates the second communication chip to switch the operating status to the sleep state; when the first communication solution is reducing the transmit power of the second communication chip, the arbitration module sends a nineteenth instruction to the second communication chip, where the nineteenth instruction indicates the second communication chip to reduce the transmit power; when the first communication solution is the first communication chip and the second communication chip performing communication processes based on the time division strategy, the arbitration module sends a twentieth instruction to the first communication chip, and the arbitration module sends a twenty-first instruction to the second communication chip, where the twentieth instruction indicates that an operating time period of the first communication chip is a seventh time slice, the twenty-first instruction indicates that an operating time period of the second communication chip is an eighth time slice, and the seventh time slice and the eighth time slice do not overlap each other; when the first communication solution is switching the operating frequency band of the first communication chip, the arbitration module sends a twenty-second instruction to the first communication chip, where the twenty-second instruction indicates the first communication chip to switch the operating frequency band; or when the first communication solution is switching the operating frequency band of the second communication chip, the arbitration module sends a twenty-third instruction to the second communication chip, where the twenty-third instruction indicates the second communication chip to switch the operating frequency band.

According to a third aspect, this application provides an electronic device, including a transceiver, a processor, and a memory. The memory is configured to store a computer program, and the processor invokes the computer program, to enable the electronic device to perform the network coexistence method provided in any one of the second aspect and the implementations of the second aspect.

According to a fourth aspect, this application provides a computer storage medium. The computer storage medium stores a computer program. When the computer program is executed by a processor, the network coexistence method provided in any one of the second aspect and the implementations of the second aspect is performed.

According to a fifth aspect, this application provides a computer program product. When the computer program product is run on a device, the device is enabled to perform the network coexistence method provided in any one of the second aspect and the implementations of the second aspect.

According to a sixth aspect, this application provides an electronic device. The electronic device includes an apparatus for performing the method described in any aspect or implementation of this application. The electronic device is, for example, a chip.

It should be understood that descriptions of technical features, technical solutions, beneficial effects, or similar languages in this application do not imply that all features and advantages can be implemented in any single implementation. On the contrary, it may be understood that the descriptions of the features or the beneficial effects mean that at least one implementation includes specific technical features, technical solutions, or beneficial effects. Therefore, the descriptions of the technical features, the technical solutions, or the beneficial effects in this application do not necessarily refer to a same implementation. Further, the technical features, the technical solutions, and the beneficial effects described in this application may be combined in any appropriate manner. Persons skilled in the art may understand that this application may be implemented without one or more specific technical features, technical solutions, or beneficial effects in a specific implementation. In another implementation, additional technical features and beneficial effects may be further identified in a specific implementation that does not reflect all implementations.

### BRIEF DESCRIPTION OF DRAWINGS

The following describes the accompanying drawings used in this application.
FIG. 1 is a diagram of a communication frequency band according to this application;
FIG. 2 is a diagram of an architecture of a communication system according to this application;
FIG. 3 is a diagram of a hardware structure of an electronic device according to this application;
FIG. 4 is a diagram of a software architecture of an electronic device according to this application;
FIG. 5A and FIG. 5B are a schematic flowchart of a network coexistence method according to this application;
FIG. 6A and FIG. 6B are a schematic flowchart of another network coexistence method according to this application;
FIG. 7A and FIG. 7B are a schematic flowchart of another network coexistence method according to this application;
FIG. 8A and FIG. 8B are a schematic flowchart of another network coexistence method according to this application;
FIG. 9A and FIG. 9B are a schematic flowchart of another network coexistence method according to this application; and
FIG. 10A and FIG. 10B are a schematic flowchart of another network coexistence method according to this application.

### DESCRIPTION OF EMBODIMENTS

The following describes technical solutions in embodiments of this application with reference to accompanying drawings. In descriptions of embodiments of this application, unless otherwise specified, "/" indicates "or". For example, A/B may indicate A or B. The term "and/or" in this specification is merely an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or an implicit indication of a quantity of indicated technical features. Therefore, a feature limited by "first" and "second" may explicitly or implicitly include one or more features. In the descriptions of embodiments of this application, unless otherwise specified, "a plurality of" means two or more.

With popularization of an ultra-wideband (ultra-wideband, UWB) ecosystem, a plurality of communication chips such as a UWB chip, a wireless fidelity (wireless fidelity, Wi-Fi) chip, and a cellular communication chip (that is, a modem (modem) chip) are all integrated into an increasing quantity of electronic devices (for example, smartphones, smartwatches, vehicle-mounted devices, and large-screen devices). However, when the electronic device simultaneously uses the plurality of communication chips for communication (which may also be referred to as "when a plurality of communication networks coexist"), the plurality of communication networks affect each other, resulting in poor communication effect. For example, there are the following problems. However, this imposes no limitation.

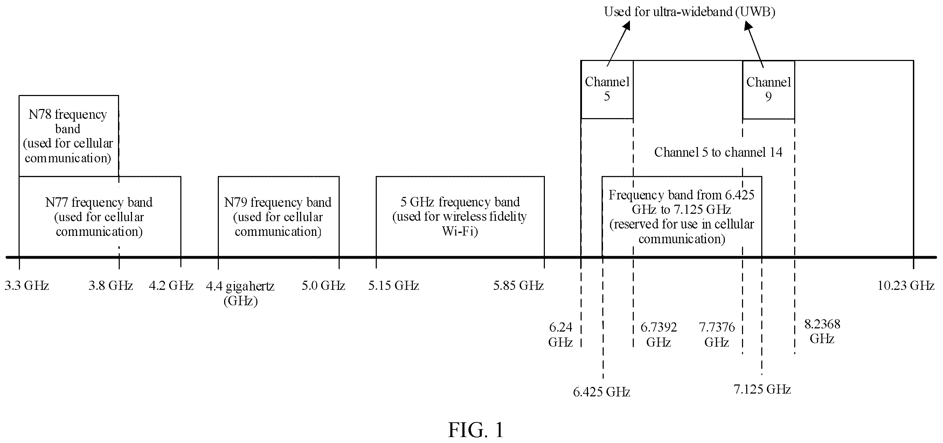

Problem 1: Commonly used frequency bands for UWB, Wi-Fi, and cellular communication are adjacent or overlap. For a specific example, refer to FIG. 1. Therefore, when a UWB network and a cellular communication network/Wi-Fi network coexist, there may be communication interference such as co-channel interference, adjacent-channel interference, and harmonic interference.

FIG. 1 shows an example of an N77 frequency band, an N78 frequency band, an N79 frequency band, a 5 gigahertz (GHz) frequency band, and a channel (Channel, CH) 5 to a CH 14. A frequency range of the N77 frequency band is 3.3 GHz to 4.2 GHz. A frequency range of the N78 frequency band is 3.3 GHz to 3.8 GHz. A frequency range of the N79 frequency band is 4.4 GHz to 5 GHz. A frequency range of the 5 GHz frequency band is 5.15 GHz to 5.85 GHz. A frequency range of the CH 5 to the CH 14 is 6.24 GHz to 10.23 GHz. For example, a frequency range of the CH 5 is 6.24 GHz to 6.7392 GHz, and a frequency range of a CH 9 is 7.7376 GHz to 8.2368 GHz. A commonly used frequency band for cellular communication includes the N77 frequency band, the N78 frequency band, and the N79 frequency band. In addition, in the CH 5 to the CH 14, a frequency band with a frequency range of 6.425 GHz to 7.125 GHz may be reserved for use in cellular communication. A commonly used frequency band for Wi-Fi includes the 5 GHz frequency band. A commonly used frequency band for UWB includes the CH 5 and the CH 9. For example, when a frequency band with a frequency range of 6.425 GHz to 7.125 GHz is used for cellular communication, there is co-channel interference between cellular communication and UWB. When the N77 frequency band and the N79 frequency band are used for cellular communication and the CH 5 is used for UWB, there is harmonic interference between cellular communication and UWB. When the CH 5 is used for UWB and a frequency band (for example, a 5.8 GHz frequency band) adjacent to the CH 5 in the 5 GHz frequency band is used for Wi-Fi, there is adjacent-channel interference between Wi-Fi and UWB. A frequency range of the 5.8 GHz frequency band is 5.725 GHz to 5.85 GHz.

It may be understood that FIG. 1 is merely used as an example. In specific implementation, a commonly used frequency band for UWB, Wi-Fi, cellular communication, or another communication mode may further include another frequency band, and in the commonly used frequency band for Wi-Fi, cellular communication, or the another communication mode, a frequency band that has communication interference with the commonly used frequency band for UWB may further include another frequency band. The following shows some examples.

For example, all of the N77 frequency band, the N78 frequency band, and the N79 frequency band shown in FIG. 1 are communication frequency bands of a fifth generation (fifth generation, 5G) mobile communication technology, and the 5G frequency band may further include a frequency band below the N77 frequency band (for example, an N50 frequency band with a frequency range of 1.432 GHz to 1.517 GHz). An available communication frequency band for cellular communication further includes a communication frequency band of a second generation (second generation, 2G) mobile communication technology/third generation (third generation, 3G) mobile communication technology/fourth generation (fourth generation, 4G) mobile communication technology or a frequency band of another future communication technology (for example, a sixth generation (sixth generation, 6G) mobile communication technology). There may be communication interference between the 6G frequency band and the commonly used frequency band for UWB.

For example, the commonly used frequency band for Wi-Fi further includes a frequency band with a frequency range of 2.4 GHz to 2.497 GHz, a 6 GHz frequency band (a frequency range of 5.925 GHz to 7.125 GHz), and the like. When the CH 5 is used for UWB and the 6 GHz frequency band is used for Wi-Fi, there is adjacent-channel interference between Wi-Fi and UWB.

Problem 2: In a co-board-level design (which may be understood as an overall design of a circuit board) of the UWB chip and the Wi-Fi chip and/or the cellular communication chip, both transmit power (18 decibels relative to one milliwatt (dBm)) of the Wi-Fi chip and transmit power (26 dBm) of the cellular communication chip are high. In addition, board-level isolation is limited by a design of an electronic device such as a mobile phone, and isolation between the UWB chip and the Wi-Fi chip and/or the cellular communication chip is low. Furthermore, a current UWB chip has a weak anti-interference capability. Therefore, when the Wi-Fi chip and/or the cellular communication chip transmit/transmits an uplink signal, a signal leaked to the UWB chip at a board level exceeds the anti-interference capability of the UWB chip, which may be expressed as follows: (Transmit power of the Wi-Fi chip and/or the cellular communication chip-Antenna isolation-Filter attenuation-Board-level attenuation)>Anti-interference capability of the UWB chip. Consequently, when the Wi-Fi chip or the cellular communication chip transmits an uplink signal, receiving of a downlink signal by the UWB chip is affected.

Embodiments of this application provide a network coexistence method, applied to an electronic device. The electronic device may include a UWB chip, a host (Host) chip (each communication chip in the electronic device is directly connected to the host chip through hardware), and a Wi-Fi chip, and/or a cellular communication chip. The electronic device may include an arbitration module. In the following implementation, an example in which the electronic device includes a Wi-Fi chip and a cellular communication chip is used for description.

The network coexistence method may include: The UWB chip, the Wi-Fi chip, and the cellular communication chip may monitor respective statuses and obtain corresponding status information, and then send the status information of the UWB chip, the Wi-Fi chip, and the cellular communication chip to the arbitration module. When the electronic device simultaneously uses the UWB chip and the cellular communication chip/Wi-Fi chip for communication (which may also be referred to as "when a UWB network and a cellular communication network/Wi-Fi network coexist"), the arbitration module may determine a current communication solution based on a preset service priority and status information of each communication chip. The determined communication solution is, for example, but is not limited to any one of the following: a UWB service operating exclusively (that is, the UWB chip operates normally, and the cellular communication chip/Wi-Fi chip does not operate), a cellular service/Wi-Fi service operating exclusively, reducing transmit power corresponding to the cellular service/Wi-Fi service, performing communication processes for the UWB service and the cellular service/Wi-Fi service based on a time division strategy, and switching an operating channel for the cellular service/Wi-Fi service/UWB service. The arbitration module may indicate, based on the determined communication solution, at least one communication chip to adjust an operating mode, to ensure performance of a service with a highest priority, and reduce or avoid impact on a service with a lower priority. Therefore, the electronic device resolves a problem of mutual impact (which may be briefly referred to as coexistence interference) between communication networks in a scenario in which a plurality of communication networks coexist, effectively improving communication effect of the electronic device.

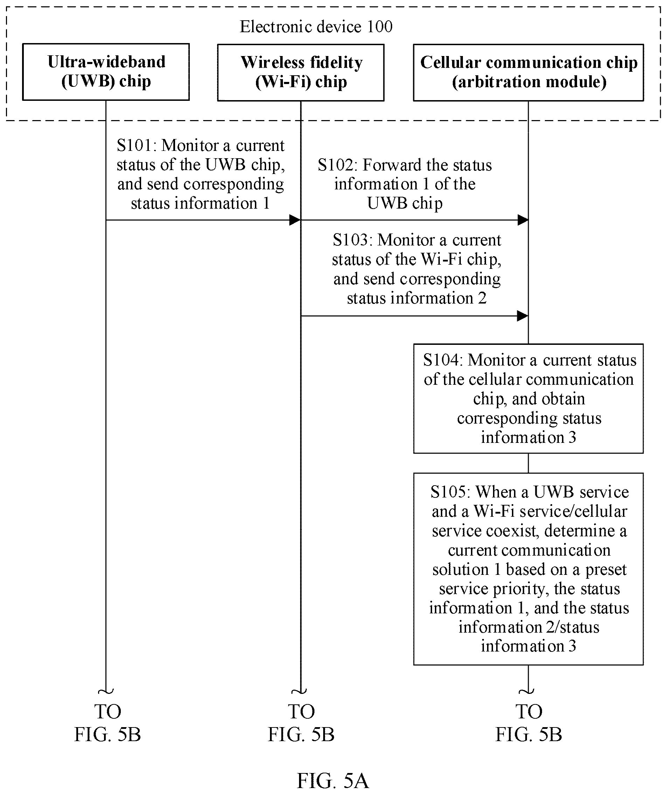

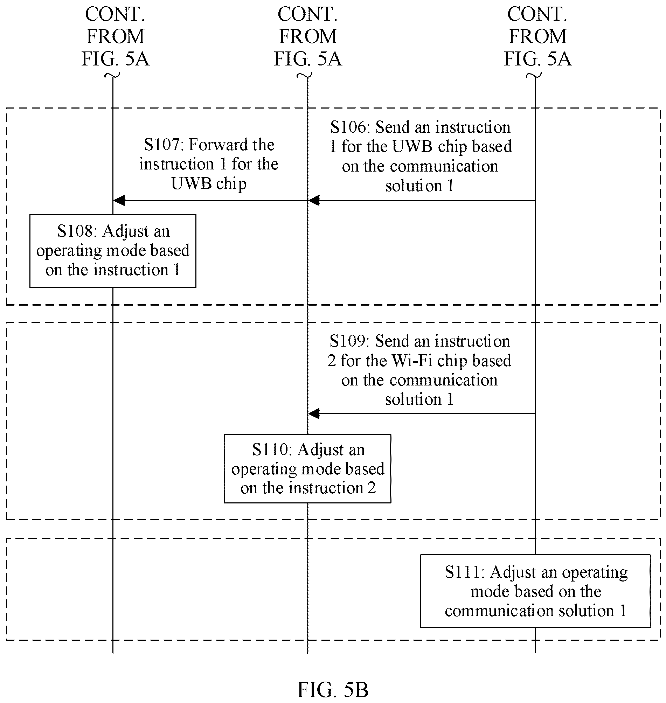

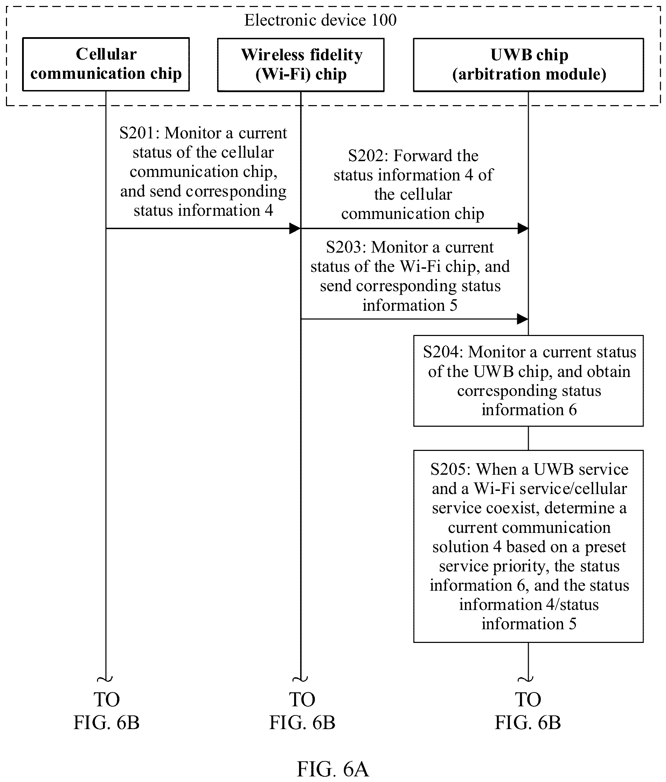

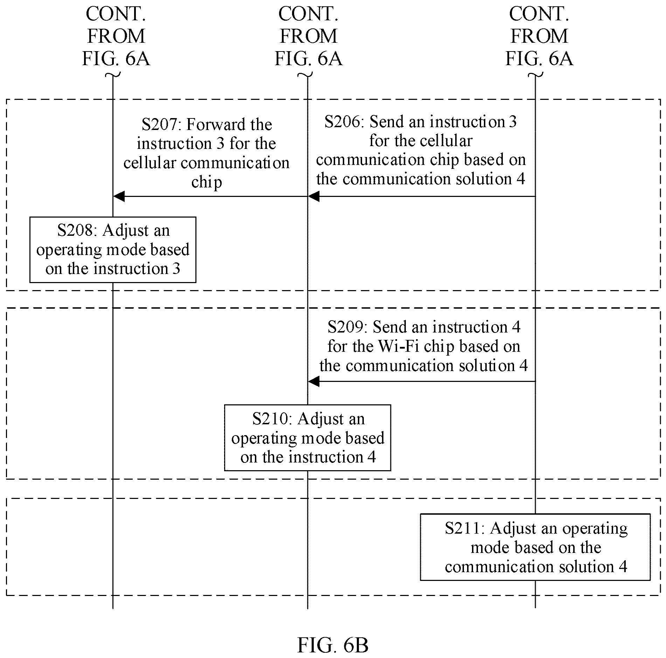

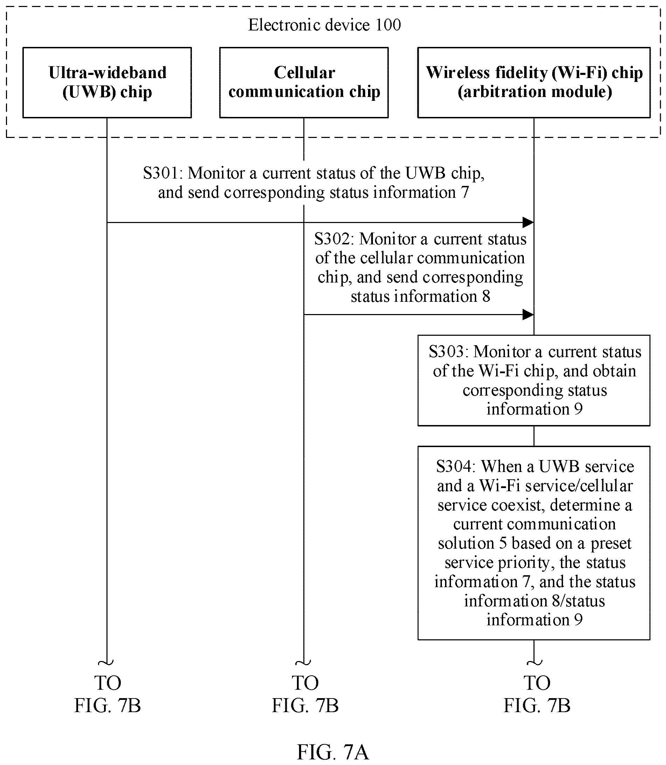

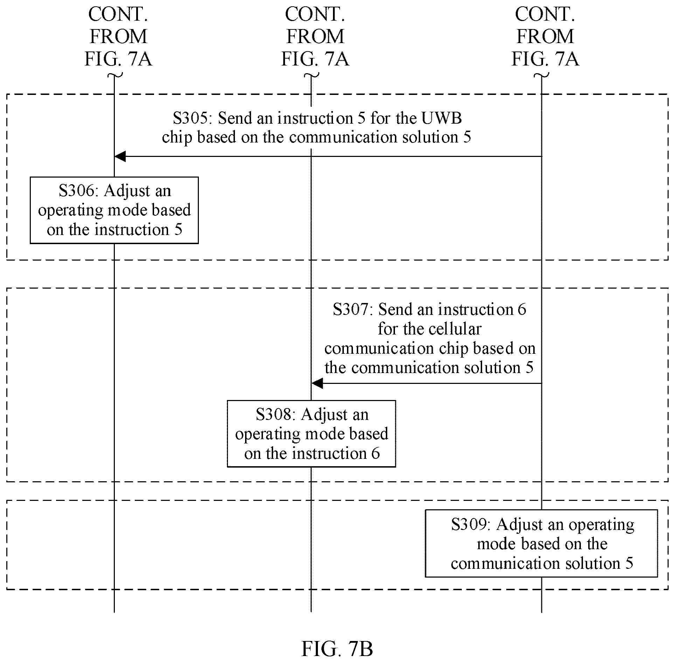

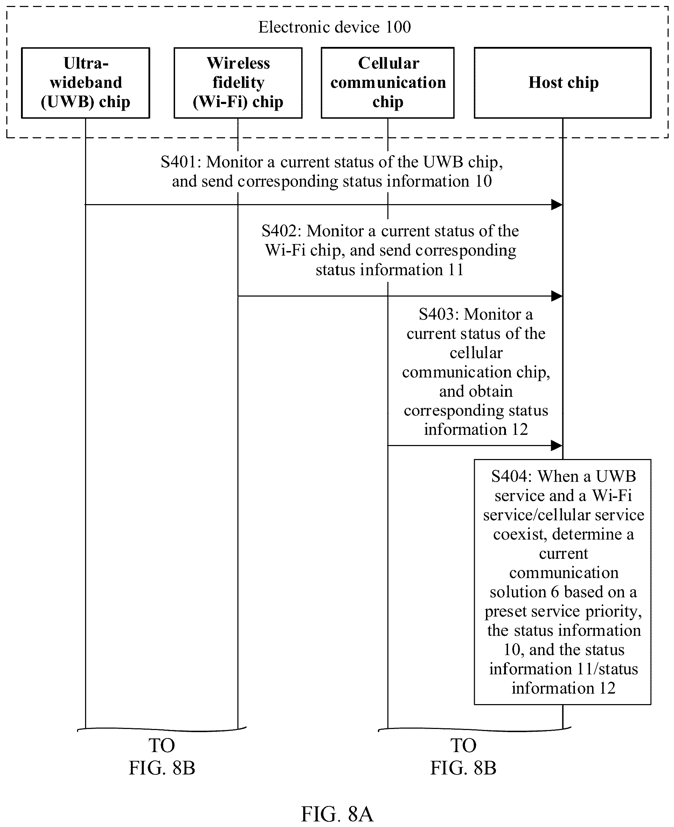

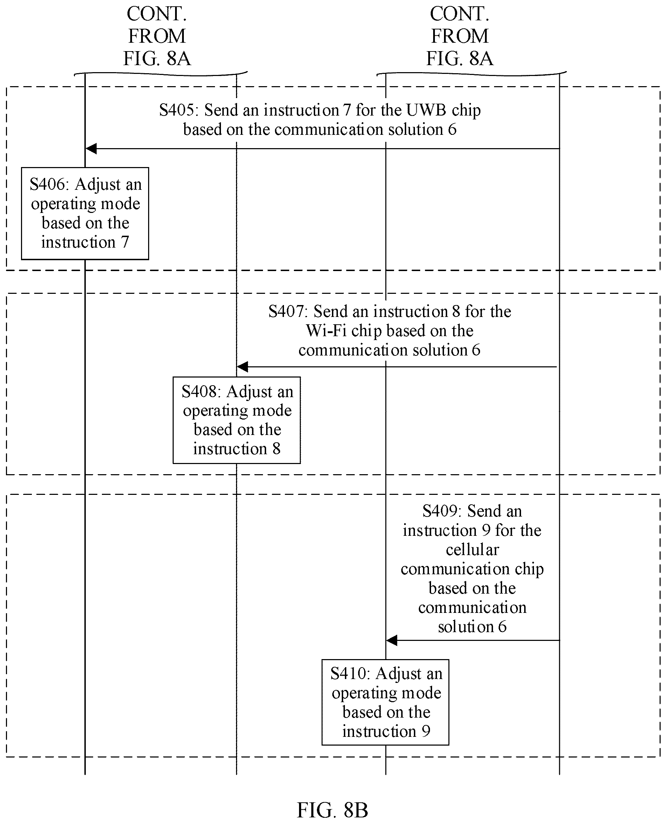

The arbitration module may be the cellular communication chip. For an implementation process in this case, refer to FIG. 5A and FIG. 5B. Alternatively, the arbitration module may be the UWB chip. For an implementation process in this case, refer to FIG. 6A and FIG. 6B. Alternatively, the arbitration module may be the Wi-Fi chip. For an implementation process in this case, refer to FIG. 7A and FIG. 7B. Alternatively, the arbitration module may be the host chip. For an implementation process in this case, refer to FIG. 8A and FIG. 8B. This is not limited in this application.

Status information/A status of any communication chip may include but is not limited to an operating status, a radio frequency (radio frequency, RF) operating frequency band (which may also be referred to as an operating channel), and a type of a bearer service and bearer data (which may be subsequently briefly referred to as a bearer service). In an implementation, an operating status of any communication chip may include a transmit state, a receive state, a sleep state, and a power-off state. When the communication chip is in the transmit state or the receive state, it may be considered that the communication chip operates normally. When the communication chip is in the sleep state or the power-off state, it may be considered that the communication chip does not operate. An operating mode of any communication chip may include but is not limited to an operating status, an RF operating frequency band, RF transmit power, and a receive and/or transmit timeslot (which may also be referred to as an operating time period).

In an implementation, to implement that when a UWB network and a cellular communication network/Wi-Fi network coexist, the coexisting communication networks may perform communication processes based on a time division strategy (which may also be referred to as "use timeslot-level scheduling"), and transmission of coexistence signaling used to implement the timeslot-level scheduling does not depend on the host chip, the electronic device may be of the following structure: The UWB chip and the cellular communication chip/Wi-Fi chip are directly connected through an independent interface, and the cellular communication chip and the Wi-Fi chip are also directly connected through an independent interface. Transmission of the coexistence signaling does not depend on the host chip, thereby reducing a communication delay of the coexistence signaling, and in some cases, the host chip may not be woken up, thereby reducing power consumption of the electronic device.

However, it may be understood that the foregoing implementation has the following problem: A hardware pin between the UWB chip, the cellular communication chip, and the Wi-Fi chip needs to be added. Therefore, there is an increase in complexity of chip design and implementation and an increase in costs, an area, and power consumption of the chip.

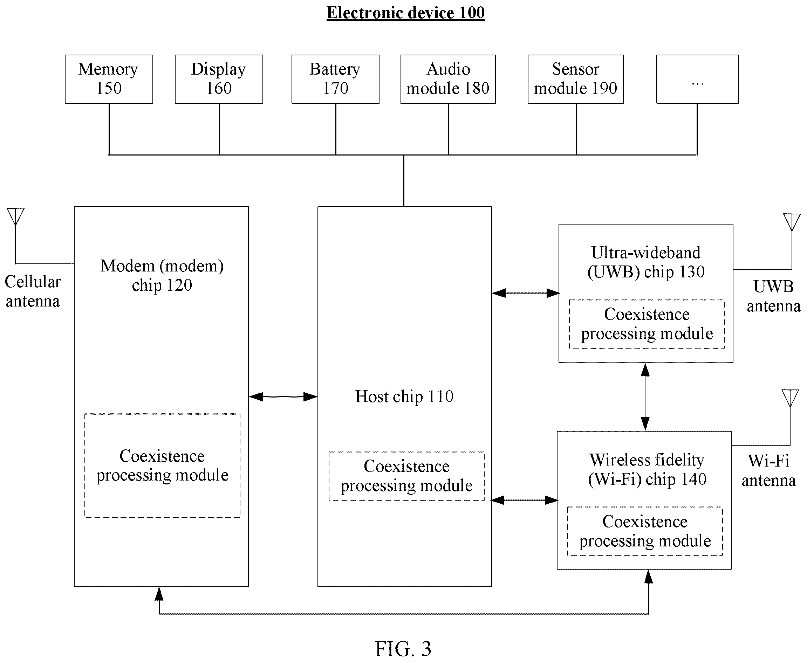

In another implementation, the UWB chip and the Wi-Fi chip may be directly connected through an independent interface, and the cellular communication chip and the Wi-Fi chip may be directly connected through an independent interface. In addition, the electronic device may bridge the UWB chip and the cellular communication chip through the Wi-Fi chip (for a structure example of the electronic device 100, refer to FIG. 3), to achieve the foregoing objective. That is, when the UWB network and the cellular communication network/Wi-Fi network coexist, the coexisting communication networks may use timeslot-level scheduling. In this implementation, transmission of the coexistence signaling can be implemented without depending on the host chip, thereby reducing a communication delay of the coexistence signaling, and in some cases, the host chip may not be woken up, thereby reducing power consumption of the electronic device. In addition, this implementation can effectively resolve the problem existing in the foregoing implementation. That is, signaling exchange between the UWB chip and the cellular communication chip can be implemented without adding a hardware pin between the existing UWB chip and the cellular communication chip. This achieves a smaller increase in complexity of chip design and implementation and a smaller increase in costs, an area, and power consumption of the chip (especially when a hardware interface is added to the cellular communication chip, complexity, an increase in costs, an increase in an area, and an increase in power consumption are very high).

In embodiments of this application, two chips (which may be referred to as a chip A and a chip B) in the electronic device are directly connected through an independent interface, that is, the chip A and the chip B are directly connected through hardware, which may also be subsequently referred to as "the chip A and the chip B are connected". Two chips (which may be referred to as a chip C and a chip D) in the electronic device are bridged through another chip (which may be referred to as a chip E), that is, the chip C and the chip E are directly connected through hardware, the chip D and the chip E are directly connected through hardware, the chip C and the chip D are not directly connected through hardware, and the chip C and the chip D may communicate with each other through the chip E.

The foregoing descriptions are provided by using an example in which the electronic device includes a Wi-Fi chip. In specific implementation, the electronic device may further include another communication chip, for example, a Bluetooth chip. For descriptions of the Bluetooth chip, refer to the descriptions of the Wi-Fi chip. For another example, refer to descriptions in FIG. 3. A type of the communication chip is not limited in this application. For ease of description, the Wi-Fi chip is still subsequently used as an example for description. However, it may be understood that the descriptions of the Wi-Fi chip may be replaced with descriptions of any other communication chip (except the UWB chip).

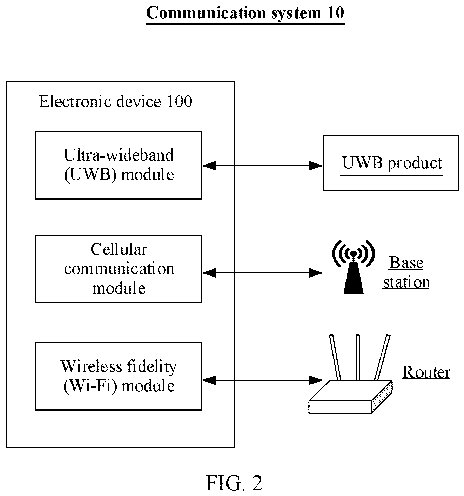

FIG. 2 is an example of a diagram of an architecture of a communication system 10.

As shown in FIG. 2, the communication system 10 may include an electronic device 100 and at least one device connected to and/or communicating with the electronic device 100. The electronic device 100 may include a UWB module, a cellular communication module, and a Wi-Fi module.

The electronic device 100 may communicate with a UWB product through the UWB module, to implement scenarios such as positioning, proximity sensing, a smart home, and an internet of vehicles. For example, the UWB product is a UWB chip, a UWB module, a UWB tag, or a UWB beacon. When the UWB module communicates with the UWB product, the UWB module may carry a related service and data. This may also be referred to as "In this case, the electronic device 100 runs a UWB service". The UWB service may include but is not limited to a UWB negotiation phase, a ranging/angle measurement service, or another data transmission service. The UWB negotiation phase includes negotiation of a related parameter for a subsequent UWB communication process by the UWB module and the UWB product.

The electronic device 100 may communicate with a base station through the cellular communication module, and communicate with another device through the base station, to implement scenarios such as a call and internet access. The base station is a device deployed in a radio access network (radio access network, RAN) and configured to provide a wireless communication function. In different radio access systems, names of the base station may be different, for example, without limitation to, a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (evolved NodeB, eNodeB) in long term evolution (long term evolution, LTE), a next generation NodeB (gNodeB, gNB) in new radio access (new radio, NR), or a base station in another future network system.

When the cellular communication module communicates with another device through the base station, the cellular communication module may carry a related service and data. This may also be referred to as "In this case, the electronic device 100 runs a cellular service". The cellular service may include but is not limited to a cellular negotiation service, a call service, a cellular internet access service, or another data transmission service. The cellular negotiation service includes negotiation of a related parameter for a subsequent cellular communication process by the cellular communication module and another device. The cellular negotiation service includes, for example, but is not limited to cellular authentication, roaming, and a dynamic host configuration protocol (dynamic host configuration protocol, DHCP). The cellular internet access service may be implemented based on any application on the electronic device 100, for example, a game service implemented based on a game application, a red packet service implemented based on a chat application, a live broadcast service implemented based on a video application, and a payment service implemented based on a payment application.

The electronic device 100 may communicate with a router through the Wi-Fi module, and communicate with another device through the router, to implement scenarios such as internet access, a smart home, and an internet of vehicles. This is not limited thereto. In another implementation, the electronic device 100 may directly communicate with another device through the Wi-Fi module, and no forwarding is performed through a router. When the Wi-Fi module communicates with another device, the Wi-Fi module may carry a related service and data. This may also be referred to as "In this case, the electronic device 100 runs a Wi-Fi service". The Wi-Fi service may include but is not limited to a Wi-Fi negotiation service, a Wi-Fi internet access service, or another data transmission service. The Wi-Fi negotiation service includes negotiation of a related parameter for a subsequent Wi-Fi communication process by the Wi-Fi communication module and another device. The Wi-Fi negotiation service includes, for example, but is not limited to Wi-Fi authentication, roaming, and DHCP. Descriptions of the Wi-Fi internet access service are similar to the descriptions of the cellular internet access service. A difference lies in that different communication modes are used. Details are not described.

In embodiments of this application, the electronic device 100 may be a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart home device such as a smart television or a smart sound box, a wearable device such as a smart band, a smartwatch, or smart glasses, an extended reality (extended reality, XR) device such as an augmented reality (augmented reality, AR) device, a virtual reality (virtual reality, VR) device, or a mixed reality (mixed reality, MR) device, a vehicle-mounted device, or a smart city device. A specific type of the electronic device is not specifically limited in embodiments of this application.

The base station in embodiments of this application may be another access network device, for example, user equipment (user equipment, UE), an access point (access point, AP), a transmission/reception point (transmission/reception point, TRP), a relay device, or another network device having a function of the base station. This is not limited in embodiments of this application.

The router in embodiments of this application may alternatively be another gateway device, for example, a switch. This is not limited in embodiments of this application.

FIG. 3 is an example of a diagram of a hardware structure of an electronic device 100.

As shown in FIG. 3, the electronic device 100 may include a host chip 110, a modem (modem) chip 120 (which may also be referred to as a modem baseband (baseband processor, BP) chip, that is, the foregoing cellular communication chip), a cellular antenna, a UWB chip 130, a UWB antenna, a Wi-Fi chip 140, a Wi-Fi antenna, a memory 150, a display 160, a battery 170, an audio module 180, a sensor module 190, and the like. Any module in the electronic device 100 may be connected to the host chip 110. For example, communication chips such as the modem chip 120, the UWB chip 130, and the Wi-Fi chip 140 are connected to the host chip 110. The modem chip 120 and the Wi-Fi chip 140 may be directly connected. The UWB chip 130 and the Wi-Fi chip 140 may be directly connected. The modem chip 120 and the UWB chip 130 may not be directly connected, but are bridged through the Wi-Fi chip 140.

The host chip 110 may also be referred to as a processor, and may include one or more processing units. For example, the host chip 110 may include an application processor (application processor, AP), optionally a graphics processing unit (graphics processing unit, GPU), an image signal processor (image signal processor, ISP), a controller, a video codec, a digital signal processor (digital signal processor, DSP), and/or the like. Different processing units may be independent devices, or may be integrated into one or more processors.

In an implementation, a memory may be further disposed in the host chip 110, and is configured to store instructions and data. In some examples, the memory in the host chip 110 is a cache memory. The memory may store instructions or data just used or cyclically used by the host chip 110. If the host chip 110 needs to use the instructions or the data again, the instructions or the data may be directly invoked from the memory. This avoids repeated access and reduces a waiting time of the host chip 110, thereby improving system efficiency.

In an implementation, the host chip 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

A cellular communication function of the electronic device 100 may be implemented through the modem chip 120, the cellular antenna, and the like. The cellular communication function includes, for example, a communication function of a technology such as 2G/3G/4G/5G/6G.

In an implementation, the cellular antenna may be configured to: receive an electromagnetic wave, and send the electromagnetic wave to the modem chip 120 for processing. The cellular antenna may be further configured to: receive a signal processed by the modem chip 120, and convert the signal into an electromagnetic wave for radiation/transmission. In an implementation, the modem chip 120 may include a modulator, a demodulator, and a baseband processor. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through the audio module 180 (for example, a speaker), or displays an image or a video through the display 160.

A UWB communication function of the electronic device 100 may be implemented through the UWB chip 130, the UWB antenna, and the like. In an implementation, the UWB antenna may be configured to: receive an electromagnetic wave, and send the electromagnetic wave to the UWB chip 130 for processing. The UWB antenna may be further configured to: receive a signal processed by the UWB chip 130, and convert the signal into an electromagnetic wave for radiation/transmission.

A Wi-Fi communication function of the electronic device 100 may be implemented through the Wi-Fi chip 140, the Wi-Fi antenna, and the like. In an implementation, the Wi-Fi antenna may be configured to: receive an electromagnetic wave, and send the electromagnetic wave to the Wi-Fi chip 140 for processing. The Wi-Fi antenna may be further configured to: receive a signal processed by the Wi-Fi chip 140, and convert the signal into an electromagnetic wave for radiation/transmission.

This is not limited thereto. The electronic device 100 may further include a communication chip and an antenna with another wireless communication function. The another wireless communication function includes, for example, another technology of a wireless local area network (wireless local area network, WLAN), Bluetooth (Bluetooth, BT), a global navigation satellite system (global navigation satellite system, GNSS), frequency modulation (frequency modulation, FM), a near field communication technology (near field communication, NFC), and an infrared technology (infrared, IR).

The antenna in the electronic device 100 may be configured to transmit and receive an electromagnetic wave signal. Each antenna in the electronic device 100 may be configured to cover one or more communication frequency bands. Different antennas may be further reused to improve antenna utilization. It may be understood that the cellular antenna, the UWB antenna, and the Wi-Fi antenna merely represent antennas in terms of a communication mode, and do not represent physical antennas. For example, some or all of the cellular antenna and the Wi-Fi antenna may be the same. This is not limited in embodiments of this application.

In an implementation, any communication chip (for example, the modem chip 120, the UWB chip 130, and the Wi-Fi chip 140) in the electronic device 100 may include a coexistence processing module. Any coexistence processing module may be configured to: monitor a status of a current communication chip, and send obtained status information to an arbitration module in the electronic device 100 for processing. The arbitration module may be any communication chip or the host chip 110. When the communication chip in which the coexistence processing module is located is the arbitration module, the coexistence processing module may determine a current communication solution based on a preset service priority and status information of each communication chip, and indicate the communication chip to operate based on the current communication solution. In an implementation, the host chip 110 in the electronic device 100 may also include a coexistence processing module. When the host chip 110 is the arbitration module, the coexistence processing module may perform a related procedure that needs to be performed by the arbitration module: receiving status information of a plurality of communication chips, determining a current communication solution based on a preset service priority and status information of each communication chip, and indicating the communication chip to operate based on the current communication solution.

The memory 150 may be configured to store computer-executable program code. The executable program code includes instructions. The memory 150 may include a program storage area and a data storage area. The program storage area may store an operating system, an application required by at least one function (for example, a sound play function or an image play function), and the like. The data storage area may store data (for example, audio data and image data) created during use of the electronic device 100, and the like. In addition, the memory 150 may include a high-speed random access memory, and may further include a non-volatile memory, for example, at least one magnetic disk storage device, a flash memory, a universal flash storage (universal flash storage, UFS), and the like. The host chip 110 may run the instructions stored in the memory 150 and/or the instructions stored in the memory disposed in the processor, to perform various functional applications and data processing of the electronic device 100.

The display 160 is configured to display an image, a video, and the like. The display 160 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a quantum dot light-emitting diode (quantum dot light-emitting diode, QLED), or the like. In an implementation, the electronic device 100 may include one or N displays 160, where N is a positive integer greater than 1.

In an implementation, the electronic device 100 implements a display function through the GPU, the display 160, the application processor, and the like. The GPU is a microprocessor for image processing, and is connected to the display 160 and the application processor. The GPU is configured to: perform mathematical and geometric computation, and render an image. The host chip 110 may include one or more GPUs that execute program instructions to generate or change display information.

The battery 170 is configured to supply power to the host chip 110, the modem chip 120, the UWB chip 130, the Wi-Fi chip 140, the memory 150, the display 160, the audio module 180, the sensor module 190, and the like in the electronic device 100.

The audio module 180 may be configured to implement an audio function of the electronic device 100, for example, audio play, recording, or a voice call. The audio module 180 is configured to convert digital audio information into an analog audio signal for output, and is further configured to convert an analog audio input into a digital audio signal. The audio module 180 may be further configured to encode and decode an audio signal. The audio module 180 includes, for example, but is not limited to a speaker (configured to convert an audio electrical signal into a sound signal), a microphone (configured to convert a sound signal into an electrical signal), a headset jack (configured to be connected to a wired headset), and the like.

The sensor module 190 may include one or more sensors, for example, a touch sensor, a gyroscope sensor, and a fingerprint sensor. The touch sensor may be configured to detect a touch operation performed on or near the touch sensor. The touch sensor may transmit the detected touch operation to the application processor to determine a type of the touch event. The gyroscope sensor may be configured to determine a motion posture of the electronic device 100, for example, determine angular velocities of the electronic device 100 around three axes (namely, x, y, and z axes). The gyroscope sensor may be further used in scenarios such as image stabilization during photographing, navigation, and motion sensing games. The fingerprint sensor is configured to collect a fingerprint, and a feature of the collected fingerprint may be used to implement scenarios such as fingerprint-based unlocking and application lock access.

It may be understood that the structure shown in this embodiment of this application does not constitute a specific limitation on the electronic device 100. In some other embodiments of this application, the electronic device 100 may include more or fewer parts than those shown in the figure. For example, the electronic device 100 shown in FIG. 3 may further include a button, an indicator, a SIM card interface, and the like. Alternatively, some parts may be combined. For example, a part or all of the audio module 180 may be integrated into the host chip 110. For another example, the display 160 and the touch sensor may be integrated together. Alternatively, some parts may be split or arranged differently. The parts shown in the figure may be implemented by hardware, software, or a combination of software and hardware.

A software system of the electronic device 100 may use a layered architecture, an event-driven architecture, a microkernel architecture, a microservice architecture, or a cloud architecture. For example, a software system of the layered architecture may be an Android (Android) system, a Harmony (Harmony) operating system (operating system, OS), or another software system. In embodiments of this application, an Android system with a layered architecture is used as an example to describe a software structure of the electronic device 100.

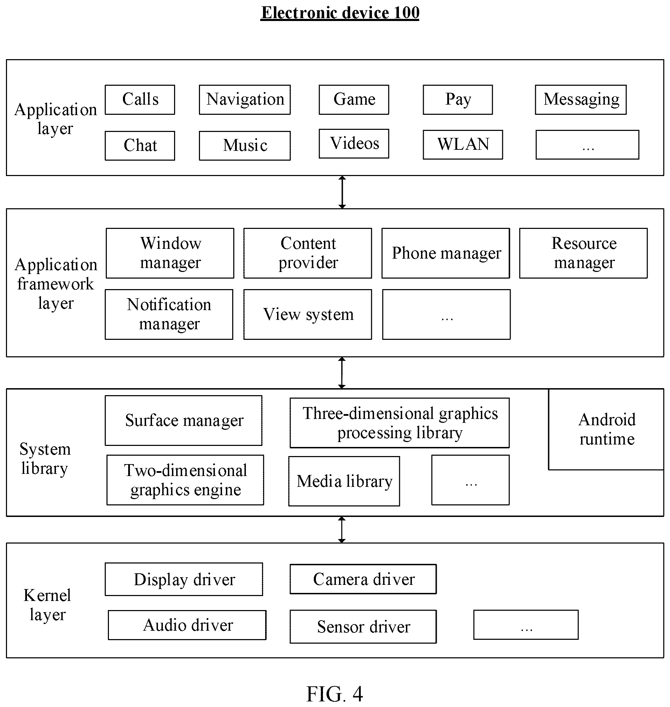

FIG. 4 is an example of a diagram of a software architecture of an electronic device 100.

In a layered architecture, software is divided into several layers, and each layer has a clear role and task. The layers communicate with each other through a software interface. In an implementation, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Calls, Navigation, Game, Pay, Chat, Music, WLAN, Videos, and Messaging. The application in this embodiment of this application may be replaced with other software such as an applet or an atomic service.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including an SMS message notification icon may include a view for displaying text and a view for displaying a picture.

The phone manager is configured to provide a communication function for the electronic device 100, for example, management of a call status (including answering, declining, or the like).

The resource manager provides various resources such as a localized character string, an icon, a picture, a layout file, and a video file to an application.

The notification manager enables an application to display notification information in the status bar, may be configured to convey a notification message, and may automatically disappear after a short pause without requiring user interaction. For example, the notification manager is configured to: notify download completion, provide a message notification, and the like. The notification manager may alternatively be a notification that appears in the status bar at the top of the system in a form of a graph or scroll bar text, for example, a notification for an application running in background, or a notification that appears on the screen in a form of a dialog window. For example, text information is prompted in the status bar, an alert tone is made, the electronic device 100 vibrates, or an indicator blinks.

The Android runtime includes a core library and a virtual machine. The Android runtime is responsible for scheduling and management of the Android system.

The core library includes two parts: a function that needs to be invoked in a Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of operating procedures of software and hardware of the electronic device 100 with reference to a Wi-Fi communication scenario.

When the touch sensor receives a touch operation, a corresponding hardware interrupt is sent to the kernel layer. The kernel layer processes the touch operation into an original input event (including touch coordinates, a timestamp of the touch operation, and other information). The original input event is stored at the kernel layer. The application framework layer obtains the original input event from the kernel layer, and identifies a control corresponding to the input event. For example, the touch operation is a touch tap operation, and a control corresponding to the tap operation is a control of a WLAN application. The WLAN application invokes an interface at the application framework layer to start the WLAN application, and then invokes the kernel layer to perform Wi-Fi communication through a Wi-Fi chip.

The following describes the network coexistence method in embodiments of this application. The method may be applied to the electronic device 100 in the communication system 10 shown in FIG. 2. The method may be applied to the electronic device 100 shown in FIG. 3. The method may be applied to the electronic device 100 shown in FIG. 4.

FIG. 5A and FIG. 5B are a schematic flowchart of a network coexistence method according to an embodiment of this application. In FIG. 5A and FIG. 5B, an example in which a cellular communication chip (that is, a modem chip) in an electronic device 100 is an arbitration module is used for description. The method may include but is not limited to the following steps.

S101: A UWB chip in the electronic device 100 monitors a current status of the UWB chip, and sends corresponding status information 1 to a Wi-Fi chip in the electronic device 100.

In this embodiment of this application, a status/status information of any communication chip (for example, the UWB chip, the Wi-Fi chip, and the cellular communication chip) in the electronic device 100 may include but is not limited to an operating status, an RF operating frequency band, and a type of a bearer service. In an implementation, an operating status of any communication chip may include a transmit (transmit, TX) state, a receive (receive, RX) state, a sleep state, and a power-off state. When the communication chip is in the power-off state, there may be a transition to the sleep state. When the communication chip is in the sleep state, there may be a transition to the power-off state, the RX state, or the TX state. When the communication chip is in the RX state, there may be a transition to the TX state or the sleep state. When the communication chip is in the TX state, there may be a transition to the RX state or the sleep state. When the communication chip is in the TX state or the RX state, it may be considered that the communication chip operates normally. When the communication chip is in the sleep state or the power-off state, it may be considered that the communication chip does not operate. This is not limited thereto. The communication chip may further have more operating statuses. For example, an operating status corresponding to a case in which the communication chip does not operate includes not only the sleep state and the power-off state. For ease of description, in this embodiment of this application, the descriptions of the foregoing operating status are used as an example for description.

For an example of the RF operating frequency band, refer to the frequency band described in FIG. 1. For an example of the type of the bearer service, refer to the example of the UWB service, the cellular service, or the Wi-Fi service in FIG. 2. When any communication chip carries a service, a type of the service may be known, or a host chip may notify the communication chip of a type of the service. For example, when the service carried in the communication chip is an internet access service (for example, a sensitive service such as game, live broadcast, red packet, or payment), the host chip may operate normally to maintain the internet access service. In this case, the host chip may notify the communication chip of the type of the service.

S102: The Wi-Fi chip in the electronic device 100 forwards the status information 1 of the UWB chip to the cellular communication chip (arbitration module) in the electronic device 100.

In an implementation, there is no direct line between the UWB chip and the cellular communication chip, and there is a direct line between the UWB chip and the Wi-Fi chip, and between the Wi-Fi chip and the cellular communication chip. In this case, the electronic device 100 may bridge the UWB chip and the cellular communication chip through the Wi-Fi chip. Therefore, the UWB chip may send data to the cellular communication chip through the Wi-Fi chip. In S101 and S102, the UWB chip may send the status information 1 to the Wi-Fi chip, so that the Wi-Fi chip forwards the status information 1 to the cellular communication chip serving as the arbitration module for processing.

S103: The Wi-Fi chip in the electronic device 100 monitors a current status of the Wi-Fi chip, and sends corresponding status information 2 to the cellular communication chip in the electronic device 100.

In an implementation, there is a direct line between the Wi-Fi chip and the cellular communication chip. Therefore, the Wi-Fi chip may directly send the status information 2 to the cellular communication chip serving as the arbitration module for processing.

S104: The cellular communication chip in the electronic device 100 monitors a current status of the cellular communication chip, and obtains corresponding status information 3.

A sequence of S101 and S102, S103, and S104 is not limited.

S105: When a UWB service and a Wi-Fi service/cellular service coexist, the cellular communication chip (arbitration module) determines a current communication solution 1 based on a preset service priority, the status information 1, and the status information 2/status information 3.

In an implementation, after obtaining status information of the UWB chip, the Wi-Fi chip, and the cellular communication chip, the cellular communication chip serving as the arbitration module may first determine, based on an operating status in the status information, communication chips that operate normally, so as to determine communication networks/communication services that currently coexist. The communication service herein is a service carried in a corresponding communication chip, and the communication service carried in the communication chip may be obtained by using a type of a bearer service in status information of the communication chip.

In some examples, when an operating status in the status information 1 of the UWB chip is the RX state or the TX state, and an operating status in the status information 2 of the Wi-Fi chip is the RX state or the TX state, both the UWB chip and the Wi-Fi chip operate normally. Therefore, currently, a UWB network and a Wi-Fi network coexist. This may also be referred to as "The UWB service and the Wi-Fi service coexist".

In some examples, when an operating status in the status information 1 of the UWB chip is the RX state or the TX state, and an operating status in the status information 3 of the cellular communication chip is the RX state or the TX state, both the UWB chip and the cellular communication chip operate normally. Therefore, currently, a UWB network and a cellular network coexist. This may also be referred to as "The UWB service and the cellular service coexist".

In an implementation, when the UWB service and the cellular service coexist, a current communication solution 2 (which may be understood as a communication solution 1 in a case in which the UWB service and the cellular service coexist) may be determined based on a preset service priority, the status information 1 of the UWB chip, and the status information 3 of the cellular communication chip. The communication solution 2 may be any one of the following: the UWB service operating exclusively (that is, the UWB chip operates normally, and the cellular communication chip does not operate), the cellular service operating exclusively (that is, the cellular communication chip operates normally, and the UWB chip does not operate), reducing transmit power of the cellular communication chip, performing communication processes for the UWB service and the cellular service based on a time division strategy, switching an operating channel for the UWB service, and switching an operating channel for the cellular service. Optionally, the UWB service operating exclusively may be specifically that the UWB service operates normally, and the cellular communication chip is in the sleep state, so that the cellular communication chip subsequently quickly resumes the transmit state or the receive state. For ease of description, in the following embodiments, an example in which a service operating exclusively is the meaning of the UWB service operating exclusively is used for description.

In some examples, when the UWB service and the cellular service coexist, the arbitration module may first determine, based on RF operating frequency bands in the status information 1 and the status information 3, whether there is communication interference (for example, co-channel interference, adjacent-channel interference, or harmonic interference) between the UWB service and the cellular service. When a current determining result is that there is no communication interference, the arbitration module may keep a current operating mode unchanged. When a current determining result is that there is communication interference, the arbitration module may first indicate the UWB chip to switch the operating channel for the UWB service, and determine whether there is still communication interference between the UWB service and the cellular service after the operating channel is switched. In a case, if a second determining result is that there is no communication interference, the arbitration module may keep a current operating mode unchanged. In this case, the communication solution 2 is switching the operating channel for the UWB service. In another case, if a second determining result is that there is communication interference, or switching of the operating channel for the UWB service fails, the arbitration module may determine a priority of the UWB service and a priority of the cellular service based on the preset service priority and types of bearer services in the status information 1 and the status information 3, and determine the communication solution 2 based on a priority determining result.

In some examples, the arbitration module may determine a priority of the UWB service and a priority of the cellular service based on the preset service priority and types of bearer services in the status information 1 and the status information 3, and determine the communication solution 2 based on a priority determining result. Specifically, when the priority of the UWB service is higher than the priority of the cellular service, the arbitration module may determine that the communication solution 2 is the UWB service operating exclusively, reducing the transmit power of the cellular communication chip, or switching the operating channel for the cellular service. When the priority of the UWB service is lower than the priority of the cellular service, the arbitration module may determine that the communication solution 2 is the cellular service operating exclusively. When the priority of the UWB service is the same as the priority of the cellular service, the arbitration module may determine that the communication solution 2 is performing communication processes for the UWB service and the cellular service based on the time division strategy.

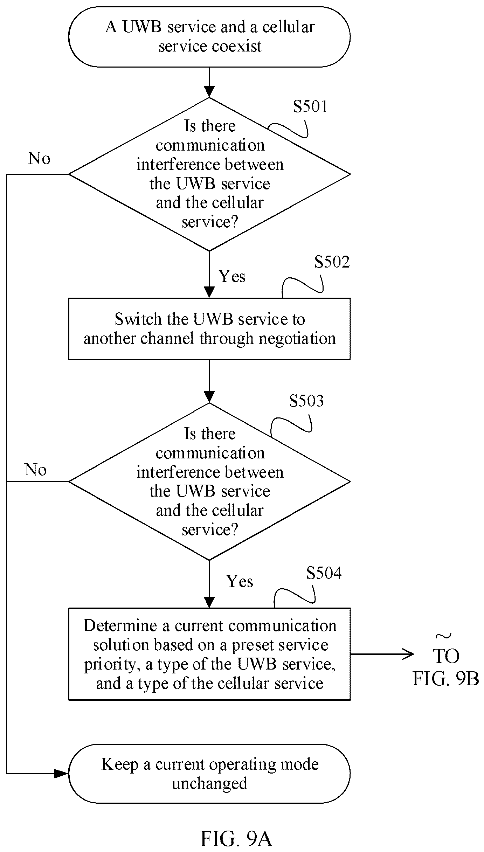

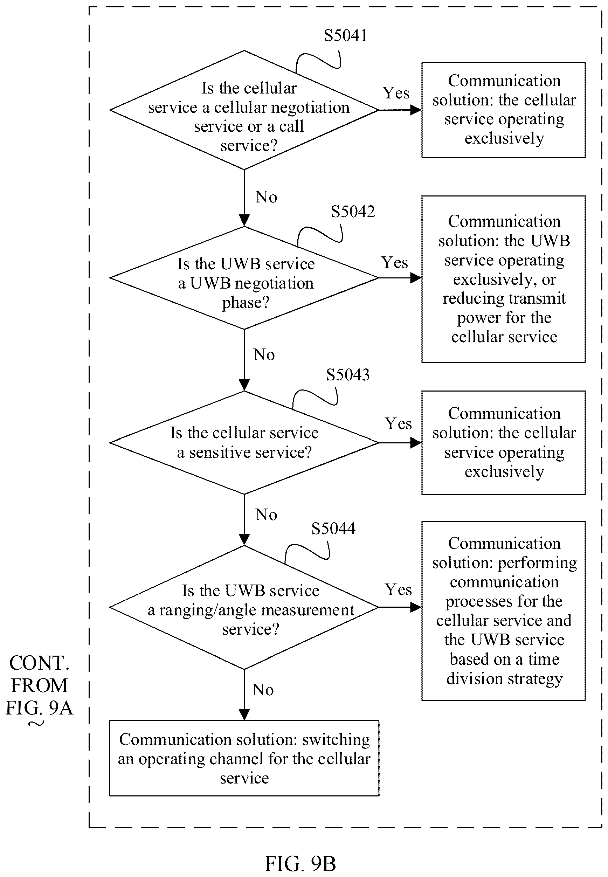

For a specific implementation process in which the arbitration module determines the communication solution 2 when the UWB service and the cellular service coexist, refer to FIG. 9A and FIG. 9B.

In an implementation, when the UWB service and the Wi-Fi service coexist, the arbitration module may determine a current communication solution 3 (which may be understood as a communication solution 1 in a case in which the UWB service and the Wi-Fi service coexist) based on a preset service priority, the status information 1 of the UWB chip, and the status information 2 of the Wi-Fi chip. The communication solution 3 may be any one of the following: the UWB service operating exclusively (that is, the UWB chip operates normally, and the Wi-Fi chip does not operate), the Wi-Fi service operating exclusively (that is, the Wi-Fi chip operates normally, and the UWB chip does not operate), reducing transmit power of the Wi-Fi chip, performing communication processes for the UWB service and the Wi-Fi service based on a time division strategy, switching an operating channel for the UWB service, and switching an operating channel for the Wi-Fi service.

In some examples, when the UWB service and the Wi-Fi service coexist, the arbitration module may first determine, based on an RF operating frequency band in the status information 1, whether the operating channel for the UWB service is a CH 9. When the operating channel for the UWB service is not the CH 9, the arbitration module may determine, based on RF operating frequency bands in the status information 1 and the status information 2, whether there is communication interference (for example, adjacent-channel interference or harmonic interference) between the UWB service and the Wi-Fi service. When a current determining result is that there is no communication interference, the arbitration module may keep a current operating mode unchanged. When a current determining result is that there is communication interference, the arbitration module may indicate the Wi-Fi chip to switch the operating channel for the Wi-Fi service (that is, perform switching to an operating channel that has no communication interference with the operating channel for the UWB service). In a case, if the operating channel for the Wi-Fi service is successfully switched, the arbitration module may keep a current operating mode unchanged. In this case, the communication solution 3 is switching the operating channel for the Wi-Fi service. In another case, if switching of the operating channel for the Wi-Fi service fails, the arbitration module may determine a priority of the UWB service and a priority of the Wi-Fi service based on the preset service priority and types of bearer services in the status information 1 and the status information 2, and determine the communication solution 3 based on a priority determining result.

In some examples, the arbitration module may determine a priority of the UWB service and a priority of the Wi-Fi service based on the preset service priority and types of bearer services in the status information 1 and the status information 2, and determine the communication solution 3 based on a priority determining result. Specifically, when the priority of the UWB service is higher than the priority of the Wi-Fi service, the arbitration module may determine that the communication solution 3 is the UWB service operating exclusively or reducing the transmit power of the Wi-Fi chip. When the priority of the UWB service is lower than the priority of the Wi-Fi service, the arbitration module may determine that the communication solution 3 is the Wi-Fi service operating exclusively or switching the operating channel for the UWB service. When the priority of the UWB service is the same as the priority of the cellular service, the arbitration module may determine that the communication solution 3 is performing communication processes for the UWB service and the Wi-Fi service based on the time division strategy.

For a specific implementation process in which the arbitration module determines the communication solution 3 when the UWB service and the Wi-Fi service coexist, refer to FIG. 9A and FIG. 9B.

In an implementation, after determining the current communication solution 1, the arbitration module may indicate, based on the communication solution 1, a corresponding communication chip to adjust an operating mode. An operating mode of any communication chip may include but is not limited to an operating status, an RF operating frequency band, RF transmit power, and a receive and/or transmit timeslot (which may be referred to as an operating time period). For a specific case, refer to Table 1 and Table 2. Table 1 is applied to a scenario in which the UWB service and the cellular service coexist, and Table 2 is applied to a scenario in which the UWB service and the Wi-Fi service coexist.

**Table 1**

| Communication solution 2 | Communication chip whose operating mode needs to be adjusted | Instruction sent by the arbitration module to the communication chip whose operating mode needs to be adjusted | Status response |
|---|---|---|---|
| The cellular service operates exclusively | UWB chip | Sleep instruction | The UWB chip switches the operating status to the sleep state |
| The UWB service operates exclusively | Cellular communication chip | Sleep instruction | The cellular communication chip switches the operating status to the sleep state |
| Reduce the transmit power of the cellular communication chip | Cellular communication chip | Instruction for reducing the RF transmit power by X dB (X is a positive number) | The RF transmit power of the cellular communication chip is reduced by X dB |
| Perform communication processes for the UWB service and the cellular communication service based on the time division strategy | UWB chip and cellular communication chip | Instruction indicating an operating time period (an instruction sent to the UWB chip indicates a first time slice, and an instruction sent to the cellular communication chip indicates a second time slice) | An operating time period of the UWB chip is set to the preset first time slice, and an operating time period of the cellular communication chip is set to the preset second time slice (the first time slice and the second time slice alternate) |
| Switch the operating channel for the UWB service | UWB chip | Channel switching instruction (which may indicate a first target channel to which switching is to be performed) | The RF operating frequency band of the UWB chip is switched to the first target channel |
| Switch the operating channel for the cellular service | Cellular communication chip | Channel switching instruction (which may indicate a second target channel to which switching is to be performed) | The RF operating channel of the cellular communication chip is switched to the second target channel |

**Table 2**

| Communication solution 3 | Communication chip whose operating mode needs to be adjusted | Instruction sent by the arbitration module to the communication chip whose operating mode needs to be adjusted | Status response |
|---|---|---|---|
| The Wi-Fi service operates exclusively | UWB chip | Sleep instruction | The UWB chip switches the operating status to the sleep state |
| The UWB service operates exclusively | Wi-Fi chip | Sleep instruction | The Wi-Fi chip switches the operating status to the sleep state |
| Reduce the transmit power of the Wi-Fi chip | Wi-Fi chip | Instruction for reducing the RF transmit power by Y dB (Y is a positive number) | The RF transmit power of the Wi-Fi chip is reduced by Y dB |
| Perform communication processes for the UWB | UWB chip and Wi-Fi chip | Instruction indicating an operating time period (an instruction sent to the UWB chip indicates a third | An operating time period of the UWB chip is set to the preset third time slice, and an operating time |
| service and the Wi-Fi service based on the time division strategy | | time slice, and an instruction sent to the Wi-Fi chip indicates a fourth time slice) | period of the Wi-Fi chip is set to the preset fourth time slice (the third time slice and the fourth time slice alternate) |
| Switch the operating channel for the UWB service | UWB chip | Channel switching instruction (which may indicate a third target channel to which switching is to be performed) | The RF operating frequency band of the UWB chip is switched to the third target channel |
| Switch the operating channel for the Wi-Fi service | Wi-Fi chip | Channel switching instruction (which may indicate a fourth target channel to which switching is to be performed) | The RF operating channel of the Wi-Fi chip is switched to the fourth target channel |

It may be understood that if the arbitration module is the same as the communication chip whose operating mode needs to be adjusted, the arbitration module does not need to send the corresponding instruction.

When the communication solution 2 is performing communication processes for the UWB service and the cellular communication service based on the time division strategy, the UWB chip and the cellular communication chip may periodically perform communication processes. The UWB chip operates for the first time slice each time after the second time slice elapses, and the cellular communication chip operates for the second time slice each time after the first time slice elapses. When the communication solution 3 is performing communication processes for the UWB service and the Wi-Fi service based on the time division strategy, the UWB chip and the Wi-Fi chip may periodically perform communication processes. The UWB chip operates for the third time slice each time after the fourth time slice elapses, and the cellular communication chip operates for the fourth time slice each time after the third time slice elapses.

For example, the communication solution 2/communication solution 3 is reducing the transmit power of the cellular communication chip/Wi-Fi chip. The electronic device 100 may reduce the transmit power of the cellular communication chip/Wi-Fi chip in an RX timeslot of the UWB service, to ensure receiving performance of the UWB service.

In an implementation, when the communication chip whose operating mode needs to be adjusted includes the UWB chip, the method may further include the following steps.

S106: The cellular communication chip in the electronic device 100 sends an instruction 1 for the UWB chip to the Wi-Fi chip based on the communication solution 1.

S107: The Wi-Fi chip in the electronic device 100 forwards the instruction 1 for the UWB chip to the UWB chip.

S108: The UWB chip in the electronic device 100 adjusts an operating mode based on the instruction 1.

In some examples, in a scenario in which the UWB service and the cellular service coexist, when the communication solution 1 (that is, the communication solution 2) is the cellular service operating exclusively, performing communication processes for the UWB service and the cellular service based on the time division strategy, or switching the operating channel for the UWB service, the cellular communication chip serving as the arbitration module may send the instruction 1 to the UWB chip through the Wi-Fi chip, so that the UWB chip adjusts the operating mode based on the instruction 1, to achieve effect that the electronic device 100 operates based on the communication solution 2. For descriptions of the instruction 1 and adjusting the operating mode by the UWB chip based on the instruction 1, refer to the corresponding descriptions in Table 1.

In some examples, in a scenario in which the UWB service and the Wi-Fi service coexist, when the communication solution 1 (that is, the communication solution 3) is the Wi-Fi service operating exclusively, performing communication for the UWB service and the Wi-Fi service based on the time division strategy, or switching the operating channel for the UWB service, the cellular communication chip serving as the arbitration module may send the instruction 1 to the UWB chip through the Wi-Fi chip (bridging the cellular communication chip and the UWB chip), so that the UWB chip adjusts the operating mode based on the instruction 1. For descriptions of the instruction 1 and adjusting the operating mode by the UWB chip based on the instruction 1, refer to the corresponding descriptions in Table 2.

In an implementation, when the communication chip whose operating mode needs to be adjusted includes the Wi-Fi chip, the method may further include the following steps.

S109: The cellular communication chip in the electronic device 100 sends an instruction 2 for the Wi-Fi chip to the Wi-Fi chip based on the communication solution 1.

S110: The Wi-Fi chip in the electronic device 100 adjusts an operating mode based on the instruction 2.

In some examples, in a scenario in which the UWB service and the Wi-Fi service coexist, when the communication solution 1 (that is, the communication solution 3) is the UWB service operating exclusively, reducing the transmit power of the Wi-Fi chip, performing communication for the UWB service and the Wi-Fi service based on the time division strategy, or switching the operating channel for the Wi-Fi service, the cellular communication chip serving as the arbitration module may send the instruction 2 to the directly connected Wi-Fi chip, so that the Wi-Fi chip adjusts the operating mode based on the instruction 2. For descriptions of the instruction 2 and adjusting the operating mode by the Wi-Fi chip based on the instruction 2, refer to the corresponding descriptions in Table 2.

In an implementation, when the communication chip whose operating mode needs to be adjusted includes the cellular communication chip, the method may further include the following step.

S111: The cellular communication chip in the electronic device 100 adjusts an operating mode based on the communication solution 1.

In some examples, in a scenario in which the UWB service and the cellular service coexist, when the communication solution 1 (that is, the communication solution 2) is the UWB service operating exclusively, reducing the transmit power of the cellular communication chip, performing communication for the UWB service and the cellular service based on the time division strategy, or switching the operating channel for the cellular service, the cellular communication chip serving as the arbitration module may adjust the operating mode of the cellular communication chip based on the communication solution 1. For a specific adjustment manner, refer to the descriptions of the status response in Table 1.

In an implementation, based on the descriptions of S105, when the UWB service and the cellular service coexist, and there is communication interference, the arbitration module first indicates the UWB chip to switch the operating channel for the UWB service. In this case, S106 to S108 may be performed (in this case, the instruction 1 is a channel switching instruction). Then, the UWB chip may send a result (that is, a success or a failure) of switching the operating channel to the cellular communication chip serving as the arbitration module through the Wi-Fi chip. If the result of switching the channel is a success, the arbitration module may determine whether there is still communication interference between the UWB service and the cellular service after the operating channel is switched. In a case, if there is no communication interference, the communication solution 2 is switching the operating channel for the UWB service. In another case, if there is still communication interference, or the result of switching the channel is a failure, the arbitration module may re-determine the communication solution 2 based on the preset service priority and the types of the bearer services in the status information 1 and the status information 3. The arbitration module may perform corresponding signaling transmission and/or adjust an operating mode based on the re-determined communication solution 2. Specifically, if in the re-determined communication solution 2, the communication chip whose operating mode needs to be adjusted still includes the UWB chip, the arbitration module may perform a process similar to that in S106 to S108 (in this case, the instruction 1 is no longer a channel switching instruction). If in the re-determined communication solution 2, the communication chip whose operating mode needs to be adjusted includes the cellular communication chip, the arbitration module may perform S111.

In an implementation, based on the descriptions of S105, when the UWB service and the Wi-Fi service coexist, and there is communication interference, the arbitration module first indicates the Wi-Fi chip to switch the operating channel for the Wi-Fi service. In this case, S109 and S110 may be performed (in this case, the instruction 2 is a channel switching instruction). Then, the Wi-Fi chip may send a result (that is, a success or a failure) of switching the operating channel to the cellular communication chip serving as the arbitration module. In a case, if the result of switching the channel is a success, the communication solution 3 is switching the operating channel for the Wi-Fi service. In another case, if the result of switching the channel is a failure, the arbitration module may re-determine the communication solution 3 based on the preset service priority and the types of the bearer services in the status information 1 and the status information 2. The arbitration module may perform corresponding signaling transmission and/or adjust an operating mode based on the re-determined communication solution 3. Specifically, if in the re-determined communication solution 3, the communication chip whose operating mode needs to be adjusted still includes the Wi-Fi chip, the arbitration module may perform a process similar to that in S109 and S110 (in this case, the instruction 2 is no longer a channel switching instruction). If in the re-determined communication solution 3, the communication chip whose operating mode needs to be adjusted includes the UWB chip, the arbitration module may perform S106 to S108.

In an implementation, after the procedure shown in FIG. 5A and FIG. 5B, the electronic device 100 may periodically perform S101 to S104, and/or when detecting that a status of the communication chip changes, the communication chip may send changed status information to the arbitration module (that is, event triggering). After obtaining the status information of the communication chip, the arbitration module may re-determine a communication solution. For example, it may be determined, based on the status information, whether a service carried in the communication chip changes. If there is a change, the communication solution is re-determined. The arbitration module may indicate, based on the re-determined communication solution, a corresponding communication chip to adjust an operating mode. In some examples, if a coexistence scenario changes (for example, changes from original coexistence of the UWB network and the cellular network to coexistence of the UWB network and the Wi-Fi network), an adjustment process is similar to that in S105 to S110. In some other examples, the arbitration module determines that a previous operating mode needs to be resumed. Therefore, the arbitration module may indicate a corresponding chip to resume the previous operating mode. A specific manner corresponds to the manner shown in Table 1 or Table 2. For example, in a scenario in which the UWB service and the cellular service originally coexist, a communication solution determined by the arbitration module is the cellular service operating exclusively, and therefore the UWB chip is indicated to enter the sleep state. Subsequently, the arbitration module determines, based on updated status information of the communication chip, that the previous operating mode needs to be resumed, and therefore the UWB chip may be indicated to leave the sleep state and switch to the original RX state or receive state. The foregoing descriptions may also be applied to FIG. 6A and FIG. 6B, FIG. 7A and FIG. 7B, and FIG. 8A and FIG. 8B. Details are not described.

FIG. 6A and FIG. 6B are a schematic flowchart of another network coexistence method according to an embodiment of this application. In FIG. 6A and FIG. 6B, an example in which a UWB chip in an electronic device 100 is an arbitration module is used for description. The method may include but is not limited to the following steps.

S201: A cellular communication chip in the electronic device 100 monitors a current status of the cellular communication chip, and sends corresponding status information 4 to a Wi-Fi chip in the electronic device 100.

S202: The Wi-Fi chip in the electronic device 100 forwards the status information 4 of the cellular communication chip to the UWB chip (arbitration module) in the electronic device 100.

In an implementation, there is no direct line between the UWB chip and the cellular communication chip, and there is a direct line between the UWB chip and the Wi-Fi chip, and between the Wi-Fi chip and the cellular communication chip. In this case, the electronic device 100 may bridge the UWB chip and the cellular communication chip through the Wi-Fi chip. Therefore, the cellular communication chip may send data to the UWB chip through the Wi-Fi chip. In S201 and S202, the cellular communication chip may send the status information 4 to the Wi-Fi chip, so that the Wi-Fi chip forwards the status information 4 to the UWB chip serving as the arbitration module for processing.

S203: The Wi-Fi chip in the electronic device 100 monitors a current status of the Wi-Fi chip, and sends corresponding status information 5 to the UWB chip in the electronic device 100.

In an implementation, there is a direct line between the Wi-Fi chip and the UWB chip. Therefore, the Wi-Fi chip may directly send the status information 5 to the UWB chip serving as the arbitration module for processing.

S204: The UWB chip in the electronic device 100 monitors a current status of the UWB chip, and obtains corresponding status information 6.

A sequence of S201 and S202, S203, and S204 is not limited.

S205: When a UWB service and a Wi-Fi service/cellular service coexist, the UWB chip (arbitration module) determines a current communication solution 4 based on a preset service priority, the status information 6, and the status information 4/status information 5.

S205 is similar to S105 in FIG. 5A. For details, refer to the descriptions of S105 in FIG. 5A.

In an implementation, when a communication chip whose operating mode needs to be adjusted includes the cellular communication chip, the method may further include the following steps.

S206: The UWB chip in the electronic device 100 sends an instruction 3 for the cellular communication chip to the Wi-Fi chip based on the communication solution 4.

S207: The Wi-Fi chip in the electronic device 100 forwards the instruction 3 for the cellular communication chip to the cellular communication chip.

S208: The cellular communication chip in the electronic device 100 adjusts an operating mode based on the instruction 3.

In some examples, in a scenario in which the UWB service and the cellular service coexist, when the communication solution 4 is the UWB service operating exclusively, reducing transmit power of the cellular communication chip, performing communication for the UWB service and the cellular service based on a time division strategy, or switching an operating channel for the cellular service, the UWB chip serving as the arbitration module may send the instruction 3 to the cellular communication chip through the Wi-Fi chip, so that the cellular communication chip adjusts the operating mode based on the instruction 3, to achieve effect that the electronic device 100 operates based on the communication solution 4. For descriptions of the instruction 3 and adjusting the operating mode by the cellular communication chip based on the instruction 3, refer to the corresponding descriptions in Table 1.

In an implementation, when a communication chip whose operating mode needs to be adjusted includes the Wi-Fi chip, the method may further include the following steps.

S209: The UWB chip in the electronic device 100 sends an instruction 4 for the Wi-Fi chip to the Wi-Fi chip based on the communication solution 4.

S210: The Wi-Fi chip in the electronic device 100 adjusts an operating mode based on the instruction 4.

In some examples, in a scenario in which the UWB service and the Wi-Fi service coexist, when the communication solution 4 is the UWB service operating exclusively, reducing transmit power of the Wi-Fi chip, performing communication for the UWB service and the Wi-Fi service based on a time division strategy, or switching an operating channel for the Wi-Fi service, the UWB chip serving as the arbitration module may send the instruction 4 to the directly connected Wi-Fi chip, so that the Wi-Fi chip adjusts the operating mode based on the instruction 4. For descriptions of the instruction 4 and adjusting the operating mode by the Wi-Fi chip based on the instruction 4, refer to the corresponding descriptions in Table 2.

In an implementation, when a communication chip whose operating mode needs to be adjusted includes the UWB chip, the method may further include the following step.

S211: The UWB chip in the electronic device 100 adjusts an operating mode based on the communication solution 4.

In some examples, in a scenario in which the UWB service and the cellular service coexist, when the communication solution 4 is the cellular service operating exclusively, performing communication processes for the UWB service and the cellular service based on a time division strategy, or switching an operating channel for the UWB service, the UWB chip serving as the arbitration module may adjust the operating mode of the UWB chip based on the communication solution 4. For a specific adjustment manner, refer to the descriptions of the status response in Table 1.

In some examples, in a scenario in which the UWB service and the Wi-Fi service coexist, when the communication solution 4 is the Wi-Fi service operating exclusively, performing communication for the UWB service and the Wi-Fi service based on a time division strategy, or switching an operating channel for the UWB service, the UWB chip serving as the arbitration module may adjust the operating mode of the UWB chip based on the communication solution 4. For a specific adjustment manner, refer to the descriptions of the status response in Table 2.

In an implementation, based on the descriptions of S205 (similar to the descriptions of S105 in FIG. 5A), when the UWB service and the cellular service coexist, and there is communication interference, the UWB chip serving as the arbitration module first performs S211, that is, independently switches the operating channel for the UWB service. If a result of switching the channel is a success, the arbitration module may determine whether there is still communication interference between the UWB service and the cellular service after the operating channel is switched. In a case, if there is no communication interference, the communication solution 4 is switching the operating channel for the UWB service. In another case, if there is still communication interference, or the result of switching the channel is a failure, the arbitration module may re-determine the communication solution 4 based on the preset service priority and types of bearer services in the status information 6 and the status information 4. The arbitration module may perform corresponding signaling transmission and/or adjust an operating mode based on the re-determined communication solution 4. Specifically, if in the re-determined communication solution 4, the communication chip whose operating mode needs to be adjusted still includes the UWB chip, the arbitration module may perform a process similar to that in S211 (in this case, the operating channel for the UWB service is no longer switched). If in the re-determined communication solution 4, the communication chip whose operating mode needs to be adjusted includes the cellular communication chip, the arbitration module may perform S206 to S208.

In an implementation, based on the descriptions of S205 (similar to the descriptions of S105 in FIG. 5A), when the UWB service and the Wi-Fi service coexist, and there is communication interference, the arbitration module first indicates the Wi-Fi chip to switch the operating channel for the Wi-Fi service. In this case, S209 and S210 may be performed (in this case, the instruction 4 is a channel switching instruction). Then, the Wi-Fi chip may send a result (that is, a success or a failure) of switching the operating channel to the UWB chip serving as the arbitration module. In a case, if the result of switching the channel is a success, the communication solution 4 is switching the operating channel for the Wi-Fi service. In another case, if the result of switching the channel is a failure, the arbitration module may re-determine the communication solution 4 based on the preset service priority and types of bearer services in the status information 6 and the status information 5. The arbitration module may perform corresponding signaling transmission and/or adjust an operating mode based on the re-determined communication solution 4. Specifically, if in the re-determined communication solution 4, the communication chip whose operating mode needs to be adjusted still includes the Wi-Fi chip, the arbitration module may perform a process similar to that in S209 and S210 (in this case, the instruction 4 is no longer a channel switching instruction). If in the re-determined communication solution 4, the communication chip whose operating mode needs to be adjusted includes the UWB chip, the arbitration module may perform S211.

FIG. 7A and FIG. 7B are a schematic flowchart of another network coexistence method according to an embodiment of this application. In FIG. 7A and FIG. 7B, an example in which a Wi-Fi chip in an electronic device 100 is an arbitration module is used for description. The method may include but is not limited to the following steps.

S301: A UWB chip in the electronic device 100 monitors a current status of the UWB chip, and sends corresponding status information 7 to the Wi-Fi chip in the electronic device 100.

In an implementation, there is a direct line between the Wi-Fi chip and the UWB chip. Therefore, the UWB chip may directly send the status information 7 to the Wi-Fi chip serving as the arbitration module for processing.

S302: A cellular communication chip in the electronic device 100 monitors a current status of the cellular communication chip, and sends corresponding status information 8 to the Wi-Fi chip in the electronic device 100.

In an implementation, there is a direct line between the Wi-Fi chip and the cellular communication chip. Therefore, the cellular communication chip may directly send the status information 8 to the Wi-Fi chip serving as the arbitration module for processing.

S303: The Wi-Fi chip in the electronic device 100 monitors a current status of the Wi-Fi chip, and obtains corresponding status information 9.

A sequence of S301, S302, and S303 is not limited.

S304: When a UWB service and a Wi-Fi service/cellular service coexist, the Wi-Fi chip (arbitration module) determines a current communication solution 5 based on a preset service priority, the status information 7, and the status information 8/status information 9.

S304 is similar to S105 in FIG. 5A. For details, refer to the descriptions of S105 in FIG. 5A.

In an implementation, when a communication chip whose operating mode needs to be adjusted includes the UWB chip, the method may further include the following steps.

S305: The Wi-Fi chip in the electronic device 100 sends an instruction 5 for the UWB chip to the UWB chip based on the communication solution 5.

S306: The UWB chip in the electronic device 100 adjusts an operating mode based on the instruction 5.

In some examples, in a scenario in which the UWB service and the cellular service coexist, when the communication solution 5 is the cellular service operating exclusively, performing communication processes for the UWB service and the cellular service based on a time division strategy, or switching an operating channel for the UWB service, the Wi-Fi chip serving as the arbitration module may send the instruction 5 to the UWB chip, so that the UWB chip adjusts the operating mode based on the instruction 5, to achieve effect that the electronic device 100 operates based on the communication solution 5. For descriptions of the instruction 5 and adjusting the operating mode by the UWB chip based on the instruction 5, refer to the corresponding descriptions in Table 1.

In some examples, in a scenario in which the UWB service and the Wi-Fi service coexist, when the communication solution 5 is the Wi-Fi service operating exclusively, performing communication for the UWB service and the Wi-Fi service based on a time division strategy, or switching an operating channel for the UWB service, the Wi-Fi chip serving as the arbitration module may send the instruction 5 to the UWB chip, so that the UWB chip adjusts the operating mode based on the instruction 5. For descriptions of the instruction 5 and adjusting the operating mode by the UWB chip based on the instruction 5, refer to the corresponding descriptions in Table 2.

In an implementation, when a communication chip whose operating mode needs to be adjusted includes the cellular communication chip, the method may further include the following steps.

S307: The Wi-Fi chip in the electronic device 100 sends an instruction 6 for the cellular communication chip to the cellular communication chip based on the communication solution 5.

S308: The cellular communication chip in the electronic device 100 adjusts an operating mode based on the instruction 6.

In some examples, in a scenario in which the UWB service and the cellular service coexist, when the communication solution 5 is the UWB service operating exclusively, reducing transmit power of the cellular communication chip, performing communication for the UWB service and the cellular service based on a time division strategy, or switching an operating channel for the cellular service, the Wi-Fi chip serving as the arbitration module may send the instruction 6 to the cellular communication chip, so that the cellular communication chip adjusts the operating mode based on the instruction 6. For descriptions of the instruction 6 and adjusting the operating mode by the cellular communication chip based on the instruction 6, refer to the corresponding descriptions in Table 1.

In an implementation, when a communication chip whose operating mode needs to be adjusted includes the Wi-Fi chip, the method may further include the following step.

S309: The Wi-Fi chip in the electronic device 100 adjusts an operating mode based on the communication solution 5.

In some examples, in a scenario in which the UWB service and the Wi-Fi service coexist, when the communication solution 5 is the UWB service operating exclusively, reducing transmit power of the Wi-Fi chip, performing communication for the UWB service and the Wi-Fi service based on a time division strategy, or switching an operating channel for the Wi-Fi service, the Wi-Fi chip serving as the arbitration module may adjust the operating mode of the Wi-Fi chip based on the communication solution 5. For a specific adjustment manner, refer to the descriptions of the status response in Table 2.

In an implementation, based on the descriptions of S304 (similar to the descriptions of S105 in FIG. 5A), when the UWB service and the cellular service coexist, and there is communication interference, the arbitration module first indicates the UWB chip to switch the operating channel for the UWB service. In this case, S305 and S306 may be performed (in this case, the instruction 5 is a channel switching instruction). Then, the UWB chip may send a result (that is, a success or a failure) of switching the operating channel to the Wi-Fi chip serving as the arbitration module. If the result of switching the channel is a success, the arbitration module may determine whether there is still communication interference between the UWB service and the cellular service after the operating channel is switched. In a case, if there is no communication interference, the communication solution 5 is switching the operating channel for the UWB service. In another case, if there is still communication interference, or the result of switching the channel is a failure, the arbitration module may re-determine the communication solution 5 based on the preset service priority and types of bearer services in the status information 7 and the status information 8. The arbitration module may perform corresponding signaling transmission and/or adjust an operating mode based on the re-determined communication solution 5. Specifically, if in the re-determined communication solution 5, the communication chip whose operating mode needs to be adjusted still includes the UWB chip, the arbitration module may perform a process similar to that in S305 and S306 (in this case, the instruction 5 is no longer a channel switching instruction). If in the re-determined communication solution 5, the communication chip whose operating mode needs to be adjusted includes the cellular communication chip, the arbitration module may perform S307 and S308.

In an implementation, based on the descriptions of S304 (similar to the descriptions of S105 in FIG. 5A), when the UWB service and the Wi-Fi service coexist, and there is communication interference, the Wi-Fi chip serving as the arbitration module first performs S309, that is, independently switches the operating channel for the Wi-Fi service. In a case, if a result of switching the channel is a success, the communication solution 5 is switching the operating channel for the Wi-Fi service. In another case, if a result of switching the channel is a failure, the arbitration module may re-determine the communication solution 5 based on the preset service priority and types of bearer services in the status information 7 and the status information 9. The arbitration module may perform corresponding signaling transmission and/or adjust an operating mode based on the re-determined communication solution 5. Specifically, if in the re-determined communication solution 5, the communication chip whose operating mode needs to be adjusted still includes the Wi-Fi chip, the arbitration module may perform a process similar to that in S309 (in this case, the operating channel for the Wi-Fi service is no longer switched). If in the re-determined communication solution 5, the communication chip whose operating mode needs to be adjusted includes the UWB chip, the arbitration module may perform S305 and S306.

FIG. 8A and FIG. 8B are a schematic flowchart of another network coexistence method according to an embodiment of this application. In FIG. 8A and FIG. 8B, an example in which a host chip in an electronic device 100 is an arbitration module is used for description. The method may include but is not limited to the following steps.

S401: A UWB chip in the electronic device 100 monitors a current status of the UWB chip, and sends corresponding status information 10 to the host chip in the electronic device 100.

S402: A Wi-Fi chip in the electronic device 100 monitors a current status of the Wi-Fi chip, and sends corresponding status information 11 to the host chip in the electronic device 100.

S403: A cellular communication chip in the electronic device 100 monitors a current status of the cellular communication chip, and obtains corresponding status information 12.

In an implementation, each communication chip in the electronic device 100 may monitor a respective status, and send corresponding status information to the host chip serving as the arbitration module for processing.

A sequence of S401, S402, and S403 is not limited.

S404: When a UWB service and a Wi-Fi service/cellular service coexist, the host chip (arbitration module) determines a current communication solution 6 based on a preset service priority, the status information 10, and the status information 11/status information 12.

S404 is similar to S105 in FIG. 5A. For details, refer to the descriptions of S105 in FIG. 5A.

In an implementation, when a communication chip whose operating mode needs to be adjusted includes the UWB chip, the method may further include the following steps.

S405: The host chip in the electronic device 100 sends an instruction 7 for the UWB chip to the UWB chip based on the communication solution 6.

S406: The UWB chip in the electronic device 100 adjusts an operating mode based on the instruction 7.

In some examples, in a scenario in which the UWB service and the cellular service coexist, when the communication solution 6 is the cellular service operating exclusively, performing communication processes for the UWB service and the cellular service based on a time division strategy, or switching an operating channel for the UWB service, the host chip serving as the arbitration module may send the instruction 7 to the UWB chip, so that the UWB chip adjusts the operating mode based on the instruction 7, to achieve effect that the electronic device 100 operates based on the communication solution 6. For descriptions of the instruction 7 and adjusting the operating mode by the UWB chip based on the instruction 7, refer to the corresponding descriptions in Table 1.

In some examples, in a scenario in which the UWB service and the Wi-Fi service coexist, when the communication solution 6 is the Wi-Fi service operating exclusively, performing communication for the UWB service and the Wi-Fi service based on a time division strategy, or switching an operating channel for the UWB service, the host chip serving as the arbitration module may send the instruction 7 to the UWB chip, so that the UWB chip adjusts the operating mode based on the instruction 7. For descriptions of the instruction 7 and adjusting the operating mode by the UWB chip based on the instruction 7, refer to the corresponding descriptions in Table 2.

In an implementation, when a communication chip whose operating mode needs to be adjusted includes the Wi-Fi chip, the method may further include the following steps.

S407: The host chip in the electronic device 100 sends an instruction 8 for the Wi-Fi chip to the Wi-Fi chip based on the communication solution 6.

S408: The Wi-Fi chip in the electronic device 100 adjusts an operating mode based on the instruction 8.

In some examples, in a scenario in which the UWB service and the Wi-Fi service coexist, when the communication solution 6 is the UWB service operating exclusively, reducing transmit power of the Wi-Fi chip, performing communication for the UWB service and the Wi-Fi service based on a time division strategy, or switching an operating channel for the Wi-Fi service, the host chip serving as the arbitration module may send the instruction 8 to the Wi-Fi chip, so that the Wi-Fi chip adjusts the operating mode based on the instruction 8. For descriptions of the instruction 8 and adjusting the operating mode by the Wi-Fi chip based on the instruction 8, refer to the corresponding descriptions in Table 2.

In an implementation, when a communication chip whose operating mode needs to be adjusted includes the cellular communication chip, the method may further include the following steps.

S409: The host chip in the electronic device 100 sends an instruction 9 for the cellular communication chip to the cellular communication chip based on the communication solution 6.

S410: The cellular communication chip in the electronic device 100 adjusts an operating mode based on the instruction 9.

In some examples, in a scenario in which the UWB service and the cellular service coexist, when the communication solution 6 is the UWB service operating exclusively, reducing transmit power of the cellular communication chip, performing communication for the UWB service and the cellular service based on a time division strategy, or switching an operating channel for the cellular service, the host chip serving as the arbitration module may send the instruction 9 to the cellular communication chip, so that the cellular communication chip adjusts the operating mode based on the instruction 9. For descriptions of the instruction 9 and adjusting the operating mode by the cellular communication chip based on the instruction 9, refer to the corresponding descriptions in Table 1.

In an implementation, based on the descriptions of S404 (similar to the descriptions of S105 in FIG. 5A), when the UWB service and the cellular service coexist, and there is communication interference, the arbitration module first indicates the UWB chip to switch the operating channel for the UWB service. In this case, S405 and S406 may be performed (in this case, the instruction 7 is a channel switching instruction). Then, the UWB chip may send a result (that is, a success or a failure) of switching the operating channel to the host chip serving as the arbitration module. If the result of switching the channel is a success, the arbitration module may determine whether there is still communication interference between the UWB service and the cellular service after the operating channel is switched. In a case, if there is no communication interference, the communication solution 6 is switching the operating channel for the UWB service. In another case, if there is still communication interference, or the result of switching the channel is a failure, the arbitration module may re-determine the communication solution 6 based on the preset service priority and types of bearer services in the status information 10 and the status information 12. The arbitration module may perform corresponding signaling transmission and/or adjust an operating mode based on the re-determined communication solution 6. Specifically, if in the re-determined communication solution 6, the communication chip whose operating mode needs to be adjusted still includes the UWB chip, the arbitration module may perform a process similar to that in S405 and S406 (in this case, the instruction 7 is no longer a channel switching instruction). If in the re-determined communication solution 6, the communication chip whose operating mode needs to be adjusted includes the cellular communication chip, the arbitration module may perform S409 and S410.

In an implementation, based on the descriptions of S404 (similar to the descriptions of S105 in FIG. 5A), when the UWB service and the Wi-Fi service coexist, and there is communication interference, the host chip serving as the arbitration module first indicates the Wi-Fi chip to switch the operating channel for the Wi-Fi service. In this case, S407 and S408 may be performed (in this case, the instruction 8 is a channel switching instruction). Then, the Wi-Fi chip may send a result (that is, a success or a failure) of switching the operating channel to the host chip serving as the arbitration module. In a case, if the result of switching the channel is a success, the communication solution 6 is switching the operating channel for the Wi-Fi service. In another case, if the result of switching the channel is a failure, the arbitration module may re-determine the communication solution 6 based on the preset service priority and types of bearer services in the status information 10 and the status information 11. The arbitration module may perform corresponding signaling transmission and/or adjust an operating mode based on the re-determined communication solution 6. Specifically, if in the re-determined communication solution 6, the communication chip whose operating mode needs to be adjusted still includes the Wi-Fi chip, the arbitration module may perform a process similar to that in S407 and S408 (in this case, the instruction 8 is no longer a channel switching instruction). If in the re-determined communication solution 6, the communication chip whose operating mode needs to be adjusted includes the UWB chip, the arbitration module may perform S405 and S406.

In the methods shown in FIG. 5A and FIG. 5B to FIG. 8A and FIG. 8B, the arbitration module may receive/obtain status information of the UWB chip, the cellular communication chip, and the Wi-Fi chip in the electronic device 100, determine, based on the status information, networks that currently coexist and priorities of services carried in the communication chips, and dynamically adjust an operating mode of a corresponding communication chip based on a determining result, to ensure performance of a service with a highest priority, thereby resolving a problem of mutual interference in a scenario in which a UWB network and a Wi-Fi network/cellular network coexist.

In addition, in the methods shown in FIG. 5A and FIG. 5B and FIG. 6A and FIG. 6B, the UWB chip and the cellular communication chip may be bridged through the Wi-Fi chip and communicate with each other. In this way, signaling exchange between the UWB chip and the cellular communication chip can be implemented without adding a hardware pin between the UWB chip and the cellular communication chip, for example, exchange of status information of the UWB chip, exchange of status information of the cellular communication chip, and exchange of an instruction provided by the arbitration module (UWB chip or cellular communication chip) for adjusting an operating mode. This achieves a smaller increase in complexity of chip design and implementation and in costs, an area, and power consumption of the chip.

The following describes, by using an example, how the arbitration module in the electronic device 100 determines a communication solution based on status information of a plurality of communication chips, that is, specific implementation processes of S105 in FIG. 5A, S205 in FIG. 6A, S304 in FIG. 7A, and S404 in FIG. 8A.

FIG. 9A and FIG. 9B are a schematic flowchart of another network coexistence method according to an embodiment of this application. In FIG. 9A and FIG. 9B, a scenario in which a UWB service and a cellular service coexist is used as an example for description. The method may include but is not limited to the following steps.

S501: An arbitration module determines whether there is communication interference between the UWB service and the cellular service.

In an implementation, commonly used channels of a UWB chip are a CH 5 and a CH 9, and an electronic device 100 may preset that the UWB chip uses the CH 9 by default/preferentially. It may be understood that based on the communication frequency band shown in FIG. 1, it may be learned that when the CH 9 is used for UWB and a frequency band (for example, an N77 or N78 frequency band) below an N79 frequency band is used for cellular communication (in this case, a reserved frequency band from 6.425 GHz to 7.125 GHz is not used for cellular communication), there is no communication interference between UWB and cellular communication. Therefore, it is preset that the UWB chip uses the CH 9 by default/preferentially. In this way, a case in which when a frequency band other than the frequency band from 6.425 GHz to 7.125 GHz is used for cellular communication, there is communication interference between UWB and cellular communication can be avoided. However, actually, due to other factors (for example, a regulatory restriction), the UWB chip cannot use the CH 9 and can use only the CH 5.

In an implementation, after determining that the UWB service and the cellular service currently coexist, the arbitration module may determine whether there is communication interference (for example, co-channel interference, adjacent-channel interference, and harmonic interference) between RF operating frequency bands in status information of the UWB chip and a cellular communication chip, that is, determine whether there is communication interference between the UWB service and the cellular service. In a case, if a determining result is no, that is, there is no communication interference between the UWB service and the cellular service, the arbitration module may determine to keep a current operating mode unchanged. In another case, if a determining result is yes, that is, there is communication interference between the UWB service and the cellular service, the arbitration module may switch the UWB service to another channel, that is, perform S502.

For example, the arbitration module may calculate a difference between the RF operating frequency bands in the status information of the UWB chip and the cellular communication chip (for example, calculate a difference between center frequency bands), and determine whether the difference is less than or equal to a preset threshold. If the difference is less than or equal to the preset threshold, it is considered that there is communication interference between the UWB service and the cellular service. If the difference is greater than the preset threshold, it is considered that there is no communication interference between the UWB service and the cellular service.

S502: The arbitration module switches the UWB service to another channel through negotiation.

In an implementation, when an operating channel for the UWB service is the CH 5, the arbitration module may switch the UWB service to the CH 9 through negotiation; or when an operating channel for the UWB service is the CH 9, the arbitration module may switch the UWB service to the CH 5 through negotiation.

In an implementation, the arbitration module is the UWB chip, and may independently switch an operating channel to another channel. For a specific example, refer to S211 in FIG. 6B. In another implementation, the arbitration module is another chip, and may directly or indirectly send a channel switching instruction to the UWB chip. For a specific implementation process, refer to S106 to S108 in FIG. 5B, S305 and S306 in FIG. 7B, or S405 and S406 in FIG. 8B.

S503: The arbitration module determines whether there is communication interference between the UWB service and the cellular service.

In an implementation, after the arbitration module successfully switches the UWB service to another channel through negotiation (which may also be referred to as "successfully switches the operating channel for the UWB service") in S502, the arbitration module may determine whether there is communication interference between the operating channel obtained after switching of the UWB service and the RF operating frequency band in the status information of the cellular communication chip. In a case, if a determining result is no, that is, there is no communication interference between the UWB service and the cellular service after the operating channel is switched, the arbitration module may determine to keep a current operating mode unchanged. In this case, a communication solution determined by the arbitration module is switching the operating channel for the UWB service, and a process of executing the communication solution is S502. In another case, if a determining result is yes, that is, there is still communication interference between the UWB service and the cellular service after the operating channel is switched, the arbitration module may obtain another communication solution based on a preset service priority, a type of the UWB service, and a type of the cellular service, that is, perform S504.

In the foregoing implementation, an example in which the arbitration module successfully switches the UWB service to another channel through negotiation in S502 is used for description. In another implementation, the operating channel cannot be successfully switched for the UWB service, for example, switching cannot be successfully performed due to factors such as a regulatory restriction. In this case, the arbitration module may perform S504.

S504: The arbitration module determines a current communication solution based on the preset service priority, the type of the UWB service, and the type of the cellular service.

In an implementation, the arbitration module may determine a priority of the UWB service and a priority of the cellular service based on the preset service priority, a type of a bearer service (that is, the type of the UWB service) in the status information of the UWB chip, and a type of a bearer service (that is, the type of the cellular service) in the status information of the cellular communication chip, and determine the current communication solution based on a determining result.

In an implementation, a specific implementation process of S504 may include but is not limited to the following steps.

S5041: The arbitration module determines whether the cellular service is a cellular negotiation service or a call service.

In some examples, the arbitration module may determine whether the cellular service is the cellular negotiation service such as cellular authentication, roaming, or DHCP, or the call service. If a determining result is yes, the arbitration module may consider that the priority of the cellular service is highest. Therefore, the arbitration module may determine that the current communication solution is the cellular service operating exclusively. If a determining result is no, the arbitration module may continue to perform subsequent determining, that is, perform S5042.

S5042: The arbitration module determines whether the UWB service is a UWB negotiation phase.

In some examples, the arbitration module may determine whether the UWB service is the UWB negotiation phase (negotiation of a related parameter for a subsequent UWB communication process by the UWB chip and a UWB product). If a determining result is yes, the arbitration module may consider that the priority of the UWB service is highest. Therefore, the arbitration module may determine that the current communication solution is the UWB service operating exclusively, or reducing transmit power for the cellular service (that is, reducing transmit power of the cellular communication chip). If a determining result is no, the arbitration module may continue to perform subsequent determining, that is, perform S5043.

S5043: The arbitration module determines whether the cellular service is a sensitive service.

In some examples, the arbitration module may determine whether the cellular service is the sensitive service such as a game service, a red packet service, a live broadcast service, or a payment service. If a determining result is yes, the arbitration module may consider that the priority of the cellular service is highest. Therefore, the arbitration module may determine that the current communication solution is the cellular service operating exclusively. If a determining result is no, the arbitration module may continue to perform subsequent determining, that is, perform S5044.

S5044: The arbitration module determines whether the UWB service is a ranging/angle measurement service.

In some examples, the arbitration module may determine whether the UWB service is the ranging/angle measurement service. If a determining result is yes, the arbitration module may consider that the priority of the UWB service and the priority of the cellular service are the same. Therefore, the arbitration module may determine that the current communication solution is performing communication processes for the cellular service and the UWB service based on a time division strategy, that is, respectively performing communication processes for the cellular service and the UWB service in time slices that do not overlap each other. If a determining result is no, the arbitration module may use a fallback communication solution, that is, switch an operating channel for the cellular service.

In the foregoing implementation, an example in which the fallback communication solution is switching the operating channel for the cellular service is used for description. In another implementation, the fallback communication solution may alternatively be performing communication processes for the cellular service and the UWB service based on the time division strategy. This is not limited in embodiments of this application.

In S5041 to S5044, in descending order of priorities, the preset service priority is sequentially a cellular negotiation service or a call service in the cellular service (which may be briefly referred to as a cellular call service), a UWB negotiation phase, a sensitive service in the cellular service (which may be briefly referred to as a cellular sensitive service), a ranging/angle measurement service in the UWB service (which may be briefly referred to as a UWB ranging/angle measurement service), and another cellular service. S5041 to S5044 are merely an example of an implementation process of S504. In specific implementation, there may be another service priority and a corresponding implementation process of S504. This is not limited in embodiments of this application.

In the foregoing method, when the UWB service and the cellular service coexist, channel avoidance of the UWB service is first attempted (that is, the operating channel for the UWB service is switched), and when the switching fails or there is still communication interference, another communication solution is determined based on a service priority, that is, a scenario in which the UWB service and the cellular service coexist and do not affect each other is preferentially considered, to ensure normal execution of a communication service of the electronic device as much as possible. In addition, when determining the communication solution based on the preset service priority, the arbitration module considers importance of a service as closely as possible based on an actual situation, to ensure that an important service is not affected, thereby achieving higher availability and effectively improving user experience.

It may be understood that in the foregoing method, the operating channel for the cellular service is not preferentially switched, but the fallback communication solution is set as switching the operating channel for the cellular service, or a communication solution of switching the operating channel for the cellular service is not used, so that the following problems can be avoided as much as possible: complexity and difficulty of switching the operating channel for the cellular service are high, and even if the switching succeeds, the cellular service may be abnormal (for example, switching from a 5G operating channel to a 2G operating channel), thereby further ensuring normal execution of a communication service of the electronic device, and reducing processing pressure of the electronic device.

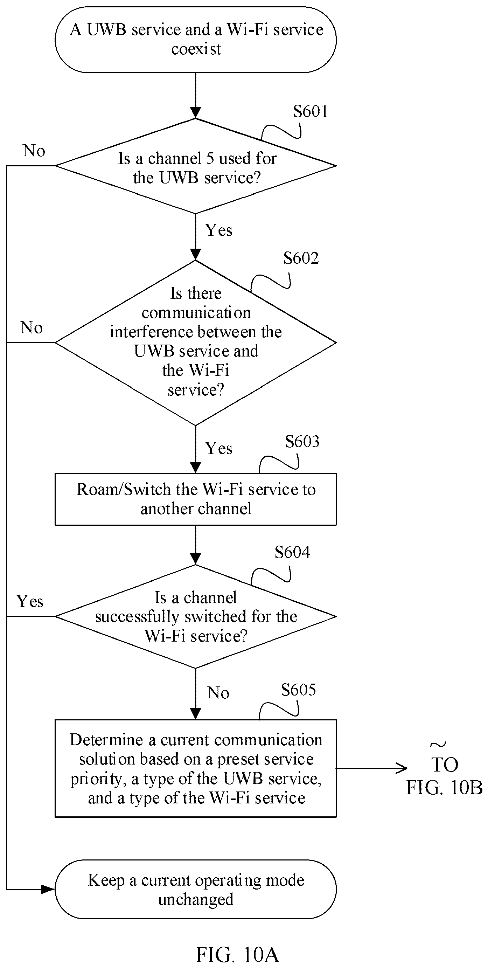

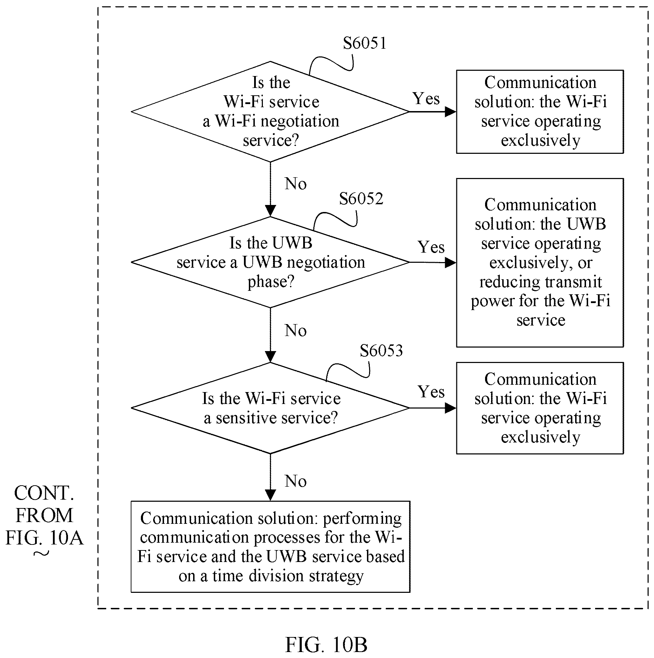

FIG. 10A and FIG. 10B are a schematic flowchart of another network coexistence method according to an embodiment of this application. In FIG. 10A and FIG. 10B, a scenario in which a UWB service and a Wi-Fi service coexist is used as an example for description. The method may include but is not limited to the following steps.

S601: An arbitration module determines whether a channel 5 (CH 5) is used for the UWB service.

In an implementation, commonly used channels of a UWB chip are the CH 5 and a CH 9, and an electronic device 100 may preset that the UWB chip uses the CH 9 by default/preferentially. It may be understood that based on the communication frequency band shown in FIG. 1, it may be learned that when the CH 9 is used for UWB and a 5 GHz frequency band is used for the Wi-Fi service, there is no communication interference between UWB and Wi-Fi. Therefore, it is preset that the UWB chip uses the CH 9 by default/preferentially. In this way, a case in which there is communication interference between UWB and Wi-Fi can be avoided as much as possible. However, actually, due to other factors (for example, a regulatory restriction), the UWB chip cannot use the CH 9 and can use only the CH 5.

In an implementation, after determining that the UWB service and the cellular service currently coexist, the arbitration module may determine whether the CH 5 is used for the UWB service. In a case, if a determining result is no, that is, the CH 9 is used for the UWB service, the arbitration module may determine that there is no communication interference between the UWB service and the Wi-Fi service, and the arbitration module may keep a current operating mode unchanged. In another case, if a determining result is yes, that is, the CH 5 is used for the UWB service, the arbitration module may perform next determining, that is, perform S602.

S602: The arbitration module determines whether there is communication interference between the UWB service and the Wi-Fi service.

In an implementation, the arbitration module may determine whether there is communication interference (for example, co-channel interference, adjacent-channel interference, and harmonic interference) between RF operating frequency bands in status information of the UWB chip and a Wi-Fi chip, that is, determine whether there is communication interference between the UWB service and the Wi-Fi service. In a case, if a determining result is no, that is, there is no communication interference between the UWB service and the Wi-Fi service, the arbitration module may determine to keep a current operating mode unchanged. In another case, if a determining result is yes, that is, there is communication interference between the UWB service and the Wi-Fi service, the arbitration module may switch the Wi-Fi service to another channel, that is, perform S603.

For example, the arbitration module may calculate a difference between the RF operating frequency bands in the status information of the UWB chip and the Wi-Fi chip (for example, calculate a difference between center frequency bands), and determine whether the difference is less than or equal to a preset threshold. If the difference is less than or equal to the preset threshold, it is considered that there is communication interference between the UWB service and the Wi-Fi service. If the difference is greater than the preset threshold, it is considered that there is no communication interference between the UWB service and the Wi-Fi service.

S603: The arbitration module roams/switches the Wi-Fi service to another channel.

In an implementation, the arbitration module may select a target channel that has no communication interference with the CH 5 from an operating frequency band of the Wi-Fi chip, and roam/switch the Wi-Fi service to the target channel.

In an implementation, the arbitration module is the Wi-Fi chip, and may independently switch an operating channel to another channel. For a specific example, refer to S309 in FIG. 7B. In another implementation, the arbitration module is another chip, and may send a channel switching instruction to the Wi-Fi chip. For a specific implementation process, refer to S109 and S110 in FIG. 5B, S209 and S210 in FIG. 6B, or S407 and S408 in FIG. 8B.

S604: The arbitration module determines whether the channel is successfully switched for the Wi-Fi service.

In an implementation, the arbitration module may determine whether the Wi-Fi service is successfully roamed/switched to another channel in S603. In a case, if a determining result is yes, that is, the operating channel for the Wi-Fi service is switched to a channel that has no communication interference with the operating channel (that is, the CH 5) for the UWB service, the arbitration module may determine to keep a current operating mode unchanged. In another case, if a determining result is no, that is, the operating channel for the Wi-Fi service is still a channel that has communication interference with the operating channel (that is, the CH 5) for the UWB service, the arbitration module may determine a current communication solution based on a preset service priority, a type of the UWB service, and a type of the Wi-Fi service, that is, perform S605.

S605: The arbitration module determines a current communication solution based on the preset service priority, the type of the UWB service, and the type of the Wi-Fi service.

In an implementation, the arbitration module may determine a priority of the UWB service and a priority of the Wi-Fi service based on the preset service priority, a type of a bearer service (that is, the type of the UWB service) in the status information of the UWB chip, and a type of a bearer service (that is, the type of the Wi-Fi service) in the status information of the Wi-Fi chip, and determine the current communication solution based on a determining result.

In an implementation, a specific implementation process of S605 may include but is not limited to the following steps.

S6051: The arbitration module determines whether the Wi-Fi service is a Wi-Fi negotiation service.

In some examples, the arbitration module may determine whether the cellular service is the Wi-Fi negotiation service such as Wi-Fi authentication, roaming, or DHCP. If a determining result is yes, the arbitration module may consider that the priority of the Wi-Fi service is highest. Therefore, the arbitration module may determine that the current communication solution is the Wi-Fi service operating exclusively. If a determining result is no, the arbitration module may continue to perform subsequent determining, that is, perform S6052.

S6052: The arbitration module determines whether the UWB service is a UWB negotiation phase.

In some examples, the arbitration module may determine whether the UWB service is the UWB negotiation phase (negotiation of a related parameter for a subsequent UWB communication process by the UWB chip and a UWB product). If a determining result is yes, the arbitration module may consider that the priority of the UWB service is highest. Therefore, the arbitration module may determine that the current communication solution is the UWB service operating exclusively, or reducing transmit power for the Wi-Fi service (that is, reducing transmit power of the Wi-Fi chip). If a determining result is no, the arbitration module may continue to perform subsequent determining, that is, perform S6053.

S6053: The arbitration module determines whether the Wi-Fi service is a sensitive service.

In some examples, the arbitration module may determine whether the Wi-Fi service is the sensitive service such as a game service, a red packet service, a live broadcast service, or a payment service. If a determining result is yes, the arbitration module may consider that the priority of the Wi-Fi service is highest. Therefore, the arbitration module may determine that the current communication solution is the Wi-Fi service operating exclusively. If a determining result is no, the arbitration module may use a fallback communication solution, that is, perform communication processes for the Wi-Fi service and the UWB service based on a time division strategy.

In S6051 to S6053, in descending order of priorities, the preset service priority is sequentially a Wi-Fi negotiation service, a UWB negotiation phase, and a sensitive service in the Wi-Fi service (which may be briefly referred to as a Wi-Fi sensitive service). S6051 to S6053 are merely an example of an implementation process of S605. In specific implementation, there may be another service priority and a corresponding implementation process of S605. This is not limited in embodiments of this application.

In the foregoing method, when the UWB service and the Wi-Fi service coexist, and the operating channel for the UWB service is the CH 5, channel avoidance of the Wi-Fi service is first attempted (that is, the operating channel for the Wi-Fi service is switched), and when the switching fails, another communication solution is determined based on a service priority, that is, a scenario in which the UWB service and the Wi-Fi service coexist and do not affect each other is preferentially considered, to ensure normal execution of a communication service of the electronic device as much as possible. In addition, when determining the communication solution based on the preset service priority, the arbitration module considers importance of a service as closely as possible based on an actual situation, to ensure that an important service is not affected, thereby achieving higher availability and effectively improving user experience.

In an implementation, when the UWB service and a Bluetooth/IR/NFC/GNSS/FM service coexist, a procedure of determining a communication solution by the arbitration module is consistent with that in FIG. 10A and FIG. 10B. In another implementation, the procedure is similar to that in FIG. 10A and FIG. 10B. A difference lies in that S601 may not be performed, but when a determining result in S602 is yes, the UWB service is switched to another channel through negotiation, and it is determined again whether there is communication interference between the UWB service and the Bluetooth/IR/NFC/GNSS/FM service. A specific process is similar to that in S502 and S503 in FIG. 9A. If there is still communication interference, S604 is performed. A specific manner of determining the communication solution is not limited in this application.

This is not limited to the implementations shown in FIG. 9A and FIG. 9B and FIG. 10A and FIG. 10B. In another implementation, the arbitration module may determine a priority of the UWB service and a priority of the Wi-Fi service/cellular service based on a preset service priority, and determine a current communication solution based on a determining result. In some examples, when the priority of the UWB service is higher, it is determined that the communication solution is the UWB service operating exclusively, reducing transmit power of the Wi-Fi chip/cellular communication chip, or switching an operating channel of the Wi-Fi chip/cellular communication chip. When the priority of the Wi-Fi service/cellular service is higher, it is determined that the communication solution is the Wi-Fi service/cellular service operating exclusively, or switching an operating channel of the UWB chip. When the priority of the UWB service and the priority of the Wi-Fi service/cellular service are the same, it is determined that the communication solution is the UWB chip and the Wi-Fi chip/cellular communication chip performing communication processes based on a time division strategy. A specific manner of determining the communication solution is not limited in this application.

All or some of the methods provided in embodiments of this application may be implemented by using software, hardware, firmware, or any combination thereof. When software is used for implementation, all or some of the methods may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, into which one or more usable media are integrated. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid-state disk, SSD)), or the like. In conclusion, the foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in embodiments of this application.

## Claims

1. An electronic device, comprising an ultra-wideband UWB chip, a wireless fidelity Wi-Fi chip, and a cellular communication chip, wherein the UWB chip is connected to the Wi-Fi chip, the cellular communication chip is connected to the Wi-Fi chip, and the UWB chip and the cellular communication chip are bridged through the Wi-Fi chip;
the UWB chip is configured to send first status information of the UWB chip to the Wi-Fi chip;
the Wi-Fi chip is configured to send the first status information to the cellular communication chip after receiving the first status information sent by the UWB chip;
the Wi-Fi chip is further configured to send second status information of the Wi-Fi chip to the cellular communication chip;
the cellular communication chip is configured to obtain third status information of the cellular communication chip, wherein the first status information, the second status information, and the third status information each comprise an operating status, an operating frequency band, and a type of a bearer service; and
the cellular communication chip is further configured to: when operating statuses of both the UWB chip and the cellular communication chip are a communication state, determine a first communication solution based on the first status information and the third status information, and indicate the UWB chip and/or the cellular communication chip to operate based on the first communication solution; or
the cellular communication chip is further configured to: when operating statuses of both the UWB chip and the Wi-Fi chip are a communication state, determine a second communication solution based on the first status information and the second status information, and indicate the UWB chip and/or the Wi-Fi chip to operate based on the second communication solution.

2. The electronic device according to claim 1, wherein the first communication solution is any one of the following: adjusting the operating status of the UWB chip to a non-communication state, adjusting the operating status of the cellular communication chip to a non-communication state, reducing transmit power of the cellular communication chip, the UWB chip and the cellular communication chip performing communication processes based on a time division strategy, switching an operating frequency band of the UWB chip, and switching an operating frequency band of the cellular communication chip; and
the second communication solution is any one of the following: adjusting the operating status of the UWB chip to a non-communication state, adjusting the operating status of the Wi-Fi chip to a non-communication state, reducing transmit power of the Wi-Fi chip, the UWB chip and the Wi-Fi chip performing communication processes based on a time division strategy, switching an operating frequency band of the UWB chip, and switching an operating frequency band of the Wi-Fi chip.

3. The electronic device according to claim 2, wherein the operating status comprises a transmit state, a receive state, a sleep state, and a power-off state, there is a mutual transition between the transmit state, the receive state, and the sleep state, there is a mutual transition between the sleep state and the power-off state, the communication state comprises the transmit state and the receive state, and the non-communication state is the sleep state.

4. The electronic device according to any one of claims 1 to 3, wherein determining the first communication solution based on the first status information and the third status information, and indicating the UWB chip and/or the cellular communication chip to operate based on the first communication solution comprises:
determining, based on a first operating frequency band in the first status information and a second operating frequency band in the third status information, whether there is communication interference between the UWB chip on the first operating frequency band and the cellular communication chip on the second operating frequency band;
when there is communication interference between the UWB chip on the first operating frequency band and the cellular communication chip on the second operating frequency band, sending a first instruction to the Wi-Fi chip, so that the Wi-Fi chip sends the first instruction to the UWB chip, wherein the first instruction indicates the UWB chip to switch the operating frequency band;
after the UWB chip successfully switches to a third operating frequency band, determining whether there is communication interference between the UWB chip on the third operating frequency band and the cellular communication chip on the second operating frequency band; and
when there is communication interference between the UWB chip on the third operating frequency band and the cellular communication chip on the second operating frequency band, or when the UWB chip fails to switch the operating frequency band, determining the first communication solution based on a preset first service priority, a type of a first service in the first status information, and a type of a second service in the third status information; or
when there is no communication interference between the UWB chip on the third operating frequency band and the cellular communication chip on the second operating frequency band, determining that the first communication solution is switching the operating frequency band of the UWB chip.

5. The electronic device according to claim 4, wherein determining the first communication solution based on the preset first service priority, the type of the first service in the first status information, and the type of the second service in the third status information comprises:
determining a priority of the first service and a priority of the second service based on the first service priority; and
when the priority of the first service is higher than the priority of the second service, determining that the first communication solution is adjusting the operating status of the cellular communication chip to the non-communication state, reducing the transmit power of the cellular communication chip, or switching the operating frequency band of the cellular communication chip;
when the priority of the first service is lower than the priority of the second service, determining that the first communication solution is adjusting the operating status of the UWB chip to the non-communication state; or
when the priority of the first service is the same as the priority of the second service, determining that the first communication solution is the UWB chip and the cellular communication chip performing communication processes based on the time division strategy.

6. The electronic device according to claim 4 or 5, wherein in descending order of priorities, the first service priority comprises a cellular negotiation service and a cellular call service, a UWB negotiation phase, a cellular sensitive service, and a UWB ranging/angle measurement service, the cellular negotiation service comprises cellular authentication, roaming, and a dynamic host configuration protocol DHCP, and the cellular sensitive service comprises a game service, a live broadcast service, a payment service, and a red packet service; and
determining the first communication solution based on the preset first service priority, the type of the first service in the first status information, and the type of the second service in the third status information comprises:
determining whether the second service is the cellular negotiation service or the cellular call service; and
when the second service is the cellular negotiation service or the cellular call service, determining that the first communication solution is adjusting the operating status of the UWB chip to the non-communication state; or
when the second service is not the cellular negotiation service or the cellular call service, determining whether the first service is the UWB negotiation phase; and
when the first service is the UWB negotiation phase, determining that the first communication solution is adjusting the operating status of the cellular communication chip to the non-communication state, or reducing the transmit power of the cellular communication chip; or
when the first service is not the UWB negotiation phase, determining whether the second service is the cellular sensitive service; and
when the second service is the cellular sensitive service, determining that the first communication solution is adjusting the operating status of the UWB chip to the non-communication state; or
when the second service is not the cellular sensitive service, determining whether the first service is the UWB ranging/angle measurement service; and
when the first service is the UWB ranging/angle measurement service, determining that the first communication solution is the UWB chip and the cellular communication chip performing communication processes based on the time division strategy; or
when the first service is not the UWB ranging/angle measurement service, determining that the first communication solution is switching the operating frequency band of the cellular communication chip.

7. The electronic device according to any one of claims 1 to 6, wherein determining the second communication solution based on the first status information and the second status information, and indicating the UWB chip and/or the Wi-Fi chip to operate based on the second communication solution comprises:
determining whether the first operating frequency band in the first status information is a channel 5;
when the first operating frequency band is the channel 5, determining, based on the first operating frequency band and a fourth operating frequency band in the second status information, whether there is communication interference between the UWB chip on the first operating frequency band and the Wi-Fi chip on the fourth operating frequency band;
when there is communication interference between the UWB chip on the first operating frequency band and the Wi-Fi chip on the fourth operating frequency band, sending a second instruction to the Wi-Fi chip, wherein the second instruction indicates the Wi-Fi chip to switch to a fifth operating frequency band, and there is no communication interference between the UWB chip on the first operating frequency band and the Wi-Fi chip on the fifth operating frequency band; and
when the Wi-Fi chip fails to switch to the fifth operating frequency band, determining the second communication solution based on a preset second service priority, the type of the first service in the first status information, and a type of a third service in the second status information; or
when the Wi-Fi chip successfully switches to the fifth operating frequency band, determining that the second communication solution is switching the operating frequency band of the Wi-Fi chip.

8. The electronic device according to claim 7, wherein determining the second communication solution based on the preset second service priority, the type of the first service in the first status information, and the type of the third service in the second status information comprises:
determining the priority of the first service and a priority of the third service based on the second service priority; and
when the priority of the first service is higher than the priority of the third service, determining that the second communication solution is adjusting the operating status of the Wi-Fi chip to the non-communication state, or reducing the transmit power of the Wi-Fi chip;
when the priority of the first service is lower than the priority of the third service, determining that the second communication solution is adjusting the operating status of the UWB chip to the non-communication state; or
when the priority of the first service is the same as the priority of the third service, determining that the second communication solution is the UWB chip and the Wi-Fi chip performing communication processes based on the time division strategy.

9. The electronic device according to claim 8, wherein in descending order of priorities, the second service priority comprises a Wi-Fi negotiation service, a UWB negotiation phase, and a Wi-Fi sensitive service, the Wi-Fi negotiation service comprises Wi-Fi authentication, roaming, and a dynamic host configuration protocol DHCP, and the Wi-Fi sensitive service comprises a game service, a live broadcast service, a payment service, and a red packet service; and
determining the second communication solution based on the preset second service priority, the type of the first service in the first status information, and the type of the third service in the second status information comprises:
determining whether the third service is the Wi-Fi negotiation service; and
when the third service is the Wi-Fi negotiation service, determining that the second communication solution is adjusting the operating status of the UWB chip to the non-communication state; or
when the third service is not the Wi-Fi negotiation service, determining whether the first service is the UWB negotiation phase; and
when the first service is the UWB negotiation phase, determining that the second communication solution is adjusting the operating status of the Wi-Fi chip to the non-communication state, or reducing the transmit power of the Wi-Fi chip; or
when the first service is not the UWB negotiation phase, determining whether the third service is the Wi-Fi sensitive service; and
when the third service is the Wi-Fi sensitive service, determining that the second communication solution is adjusting the operating status of the UWB chip to the non-communication state; or
when the third service is not the Wi-Fi sensitive service, determining that the second communication solution is the UWB chip and the cellular communication chip performing communication processes based on the time division strategy.

10. The electronic device according to any one of claims 3 to 9, wherein indicating the UWB chip and/or the cellular communication chip to operate based on the first communication solution comprises:
when the first communication solution is adjusting the operating status of the UWB chip to the non-communication state, sending a third instruction to the Wi-Fi chip, so that the Wi-Fi chip sends the third instruction to the UWB chip, wherein the third instruction indicates the UWB chip to switch the operating status to the sleep state;
when the first communication solution is adjusting the operating status of the cellular communication chip to the non-communication state, switching the operating status of the cellular communication chip to the sleep state;
when the first communication solution is reducing the transmit power of the cellular communication chip, reducing the transmit power of the cellular communication chip;
when the first communication solution is the UWB chip and the cellular communication chip performing communication processes based on the time division strategy, sending a fourth instruction to the Wi-Fi chip, so that the Wi-Fi chip sends the fourth instruction to the UWB chip, wherein the fourth instruction indicates that an operating time period of the UWB chip is a first time slice, the first time slice and a second time slice do not overlap each other, and the second time slice is an operating time period of the cellular communication chip;
when the first communication solution is switching the operating frequency band of the UWB chip, sending a fifth instruction to the Wi-Fi chip, so that the Wi-Fi chip sends the fifth instruction to the UWB chip, wherein the fifth instruction indicates the UWB chip to switch the operating frequency band; or
when the first communication solution is switching the operating frequency band of the cellular communication chip, switching the operating frequency band of the cellular communication chip.

11. The electronic device according to any one of claims 3 to 10, wherein indicating the UWB chip and/or the Wi-Fi chip to operate based on the second communication solution comprises:
when the second communication solution is adjusting the operating status of the UWB chip to the non-communication state, sending a sixth instruction to the Wi-Fi chip, so that the Wi-Fi chip sends the sixth instruction to the UWB chip, wherein the sixth instruction indicates the UWB chip to switch the operating status to the sleep state;
when the second communication solution is adjusting the operating status of the Wi-Fi chip to the non-communication state, sending a seventh instruction to the Wi-Fi chip, wherein the seventh instruction indicates the Wi-Fi chip to switch the operating status to the sleep state;
when the second communication solution is reducing the transmit power of the Wi-Fi chip, sending an eighth instruction to the Wi-Fi chip, wherein the eighth instruction indicates the Wi-Fi chip to reduce the transmit power;
when the second communication solution is the UWB chip and the Wi-Fi chip performing communication processes based on the time division strategy, sending a ninth instruction and a tenth instruction to the Wi-Fi chip, so that the Wi-Fi chip sends the ninth instruction to the UWB chip, wherein the ninth instruction indicates that the operating time period of the UWB chip is a third time slice, the tenth instruction indicates that an operating time period of the Wi-Fi chip is a fourth time slice, and the third time slice and the fourth time slice do not overlap each other;
when the second communication solution is switching the operating frequency band of the UWB chip, sending an eleventh instruction to the Wi-Fi chip, so that the Wi-Fi chip sends the eleventh instruction to the UWB chip, wherein the eleventh instruction indicates the UWB chip to switch the operating frequency band; or
when the second communication solution is switching the operating frequency band of the Wi-Fi chip, sending a twelfth instruction to the Wi-Fi chip, wherein the twelfth instruction indicates the Wi-Fi chip to switch the operating frequency band.

12. A network coexistence method, applied to an electronic device, wherein the electronic device comprises a first communication chip and a second communication chip, the first communication chip is an ultra-wideband UWB chip, and the method comprises:
obtaining first status information of the first communication chip, and obtaining second status information of the second communication chip, wherein the first status information and the second status information comprise an operating status, an operating frequency band, and a type of a bearer service;
when operating statuses of both the first communication chip and the second communication chip are a communication state, determining a first communication solution based on the first status information and the second status information; and
indicating the first communication chip and/or the second communication chip to operate based on the first communication solution.

13. The method according to claim 12, wherein the first communication solution is any one of the following: adjusting the operating status of the first communication chip to a non-communication state, adjusting the operating status of the second communication chip to a non-communication state, reducing transmit power of the second communication chip, the first communication chip and the second communication chip performing communication processes based on a time division strategy, switching an operating frequency band of the first communication chip, and switching an operating frequency band of the second communication chip.

14. The method according to claim 13, wherein the operating status comprises a transmit state, a receive state, a sleep state, and a power-off state, there is a mutual transition between the transmit state, the receive state, and the sleep state, there is a mutual transition between the sleep state and the power-off state, the communication state comprises the transmit state and the receive state, and the non-communication state is the sleep state.

15. The method according to any one of claims 12 to 14, wherein the second communication chip is a cellular communication chip, a wireless fidelity Wi-Fi chip, a Bluetooth BT chip, an infrared IR chip, a near field communication NFC chip, a global navigation satellite system GNSS chip, or a frequency modulation FM chip.

16. The method according to any one of claims 12 to 15, wherein determining the first communication solution based on the first status information and the second status information comprises:
determining, based on a first operating frequency band in the first status information and a second operating frequency band in the second status information, whether there is communication interference between the first communication chip on the first operating frequency band and the second communication chip on the second operating frequency band; and
when there is communication interference between the first communication chip on the first operating frequency band and the second communication chip on the second operating frequency band, determining the first communication solution based on the first status information and the second status information.

17. The method according to any one of claims 12 to 16, wherein determining the first communication solution based on the first status information and the second status information comprises:
determining a priority of a first service and a priority of a second service based on a preset first service priority, a type of the first service in the first status information, and a type of the second service in the second status information; and
when the priority of the first service is higher than the priority of the second service, determining that the first communication solution is adjusting the operating status of the second communication chip to the non-communication state, reducing the transmit power of the second communication chip, or switching the operating frequency band of the second communication chip;
when the priority of the first service is lower than the priority of the second service, determining that the first communication solution is adjusting the operating status of the first communication chip to the non-communication state, or switching the operating frequency band of the first communication chip; or
when the priority of the first service is the same as the priority of the second service, determining that the first communication solution is the first communication chip and the second communication chip performing communication processes based on the time division strategy.

18. The method according to any one of claims 12 to 17, wherein the second communication chip is a cellular communication chip, and determining the first communication solution based on the first status information and the second status information comprises:
determining, based on the first operating frequency band in the first status information and a third operating frequency band in the second status information, whether there is communication interference between the first communication chip on the first operating frequency band and the second communication chip on the third operating frequency band;
when there is communication interference between the first communication chip on the first operating frequency band and the second communication chip on the third operating frequency band, switching the operating frequency band of the first communication chip;
after the operating frequency band of the first communication chip is successfully switched to a fourth operating frequency band, determining whether there is communication interference between the first communication chip on the fourth operating frequency band and the second communication chip on the third operating frequency band; and
when there is communication interference between the first communication chip on the fourth operating frequency band and the second communication chip on the third operating frequency band, or when switching of the operating frequency band of the first communication chip fails, determining the first communication solution based on a preset second service priority, the type of the first service in the first status information, and a type of a third service in the second status information; or
when there is no communication interference between the first communication chip on the fourth operating frequency band and the second communication chip on the third operating frequency band, determining that the first communication solution is switching the operating frequency band of the first communication chip.

19. The method according to any one of claims 12 to 17, wherein the second communication chip is a wireless fidelity Wi-Fi chip, a Bluetooth BT chip, an infrared IR chip, a near field communication NFC chip, a global navigation satellite system GNSS chip, or a frequency modulation FM chip, and determining the first communication solution based on the first status information and the second status information comprises:
determining whether the first operating frequency band in the first status information is a channel 5;
when the first operating frequency band is the channel 5, determining, based on the first operating frequency band in the first status information and a fifth operating frequency band in the second status information, whether there is communication interference between the first communication chip on the first operating frequency band and the second communication chip on the fifth operating frequency band;
when there is communication interference between the first communication chip on the first operating frequency band and the second communication chip on the fifth operating frequency band, switching the operating frequency band of the second communication chip; and
when switching of the operating frequency band of the second communication chip to a sixth operating frequency band fails, determining the first communication solution based on a preset third service priority, the type of the first service in the first status information, and a type of a fourth service in the second status information; or
when the operating frequency band of the second communication chip is successfully switched to a sixth operating frequency band, determining that the first communication solution is switching the operating frequency band of the second communication chip, wherein there is no communication interference between the first communication chip on the first operating frequency band and the second communication chip on the sixth operating frequency band.

20. The method according to any one of claims 12 to 19, wherein the electronic device comprises an arbitration module, the arbitration module is the first communication chip, the second communication chip, a third communication chip, or a host chip in the electronic device, and the third communication chip is different from both the first communication chip and the second communication chip;
obtaining the first status information of the first communication chip comprises: obtaining, by the arbitration module, the first status information;
obtaining the second status information of the second communication chip comprises: obtaining, by the arbitration module, the second status information;
determining the first communication solution based on the first status information and the second status information comprises: determining, by the arbitration module, the first communication solution based on the first status information and the second status information; and
indicating the first communication chip and/or the second communication chip to operate based on the first communication solution comprises: indicating, by the arbitration module, the first communication chip and/or the second communication chip to operate based on the first communication solution.

21. The method according to claim 20, wherein the arbitration module is a cellular communication chip, the first communication chip is connected to the second communication chip, and the arbitration module is connected to the second communication chip;
obtaining, by the arbitration module, the first status information comprises: sending, by the first communication chip, the first status information to the second communication chip, and sending, by the second communication chip, the first status information to the arbitration module; and
obtaining, by the arbitration module, the second status information comprises:
when the arbitration module is the second communication chip, monitoring, by the arbitration module, a current status, and obtaining the second status information; or
when the arbitration module is not the second communication chip, sending, by the second communication chip, the second status information to the arbitration module.

22. The method according to claim 20, wherein the arbitration module is the first communication chip, the second communication chip is a cellular communication chip or a Wi-Fi chip, the first communication chip in the electronic device is connected to the Wi-Fi chip, and the cellular communication chip in the electronic device is connected to the Wi-Fi chip;
obtaining, by the arbitration module, the first status information comprises: monitoring, by the arbitration module, a current status, and obtaining the first status information; and
obtaining, by the arbitration module, the second status information comprises:
when the second communication chip is a cellular communication chip, sending, by the second communication chip, the second status information to the Wi-Fi chip, and sending, by the Wi-Fi chip, the second status information to the arbitration module; or
when the second communication chip is a Wi-Fi chip, sending, by the second communication chip, the second status information to the arbitration module.

23. The method according to claim 20, wherein the arbitration module is a Wi-Fi chip, the second communication chip is a cellular communication chip or a Wi-Fi chip, the first communication chip in the electronic device is connected to the Wi-Fi chip, and the cellular communication chip in the electronic device is connected to the Wi-Fi chip;
obtaining, by the arbitration module, the first status information comprises: sending, by the first communication chip, the first status information to the arbitration module; and
obtaining, by the arbitration module, the second status information comprises:
when the second communication chip is a cellular communication chip, sending, by the second communication chip, the second status information to the arbitration module; or
when the second communication chip is a Wi-Fi chip, monitoring, by the arbitration module, a current status, and obtaining the second status information.

24. The method according to claim 20, wherein the arbitration module is the host chip;
obtaining, by the arbitration module, the first status information comprises: sending, by the first communication chip, the first status information to the arbitration module; and
obtaining, by the arbitration module, the second status information comprises: sending, by the second communication chip, the second status information to the arbitration module.

25. The method according to claim 21, wherein indicating the first communication chip and/or the second communication chip to operate based on the first communication solution comprises:
when the first communication solution is adjusting the operating status of the first communication chip to the non-communication state, sending, by the arbitration module, a first instruction to the second communication chip, and sending, by the second communication chip, the first instruction to the first communication chip, wherein the first instruction indicates the first communication chip to switch the operating status to the sleep state;
when the first communication solution is adjusting the operating status of the second communication chip to the non-communication state, and the arbitration module is not the second communication chip, sending, by the arbitration module, a second instruction to the second communication chip, wherein the second instruction indicates the second communication chip to switch the operating status to the sleep state;
when the first communication solution is reducing the transmit power of the second communication chip, and the arbitration module is not the second communication chip, sending, by the arbitration module, a third instruction to the second communication chip, wherein the third instruction indicates the second communication chip to reduce the transmit power;
when the first communication solution is the first communication chip and the second communication chip performing communication processes based on the time division strategy, sending, by the arbitration module, a fourth instruction to the second communication chip, and sending, by the second communication chip, the fourth instruction to the first communication chip, wherein the fourth instruction indicates that an operating time period of the first communication chip is a first time slice, the first time slice and a second time slice do not overlap each other, and the second time slice is an operating time period of the second communication chip;
when the first communication solution is switching the operating frequency band of the first communication chip, sending, by the arbitration module, a fifth instruction to the second communication chip, and sending, by the second communication chip, the fifth instruction to the first communication chip, wherein the fifth instruction indicates the first communication chip to switch the operating frequency band; or
when the first communication solution is switching the operating frequency band of the second communication chip, and the arbitration module is not the second communication chip, sending, by the arbitration module, a sixth instruction to the second communication chip, wherein the sixth instruction indicates the second communication chip to switch the operating frequency band.

26. The method according to claim 22, wherein indicating the first communication chip and/or the second communication chip to operate based on the first communication solution comprises:
when the first communication solution is adjusting the operating status of the second communication chip to the non-communication state, and the second communication chip is a cellular communication chip, sending, by the arbitration module, a seventh instruction to the Wi-Fi chip, and sending, by the Wi-Fi chip, the seventh instruction to the second communication chip, wherein the seventh instruction indicates the second communication chip to switch the operating status to the sleep state;
when the first communication solution is adjusting the operating status of the second communication chip to the non-communication state, and the second communication chip is a Wi-Fi chip, sending, by the arbitration module, a seventh instruction to the second communication chip;
when the first communication solution is reducing the transmit power of the second communication chip, and the second communication chip is a cellular communication chip, sending, by the arbitration module, an eighth instruction to the Wi-Fi chip, and sending, by the Wi-Fi chip, the eighth instruction to the second communication chip, wherein the eighth instruction indicates the second communication chip to reduce the transmit power;
when the first communication solution is reducing the transmit power of the second communication chip, and the second communication chip is a Wi-Fi chip, sending, by the arbitration module, the eighth instruction to the second communication chip;
when the first communication solution is the first communication chip and the second communication chip performing communication processes based on the time division strategy, and the second communication chip is a cellular communication chip, sending, by the arbitration module, a ninth instruction to the Wi-Fi chip, and sending, by the Wi-Fi chip, the ninth instruction to the second communication chip, wherein the ninth instruction indicates that an operating time period of the second communication chip is a third time slice, the third time slice and a fourth time slice do not overlap each other, and the fourth time slice is an operating time period of the first communication chip;
when the first communication solution is the first communication chip and the second communication chip performing communication processes based on the time division strategy, and the second communication chip is a Wi-Fi chip, sending, by the arbitration module, the ninth instruction to the second communication chip;
when the first communication solution is switching the operating frequency band of the second communication chip, and the second communication chip is a cellular communication chip, sending, by the arbitration module, a tenth instruction to the Wi-Fi chip, and sending, by the Wi-Fi chip, the tenth instruction to the second communication chip, wherein the tenth instruction indicates the second communication chip to switch the operating frequency band; or
when the first communication solution is switching the operating frequency band of the second communication chip, and the second communication chip is a Wi-Fi chip, sending, by the arbitration module, the tenth instruction to the second communication chip.

27. The method according to claim 23, wherein indicating the first communication chip and/or the second communication chip to operate based on the first communication solution comprises:
when the first communication solution is adjusting the operating status of the first communication chip to the non-communication state, sending, by the arbitration module, an eleventh instruction to the first communication chip, wherein the eleventh instruction indicates the first communication chip to switch the operating status to the sleep state;
when the first communication solution is adjusting the operating status of the second communication chip to the non-communication state, and the arbitration module is not the second communication chip, sending, by the arbitration module, a twelfth instruction to the second communication chip, wherein the twelfth instruction indicates the second communication chip to switch the operating status to the sleep state;
when the first communication solution is reducing the transmit power of the second communication chip, and the arbitration module is not the second communication chip, sending, by the arbitration module, a thirteenth instruction to the second communication chip, wherein the thirteenth instruction indicates the second communication chip to reduce the transmit power;
when the first communication solution is the first communication chip and the second communication chip performing communication processes based on the time division strategy, sending, by the arbitration module, a fourteenth instruction to the first communication chip, wherein the fourteenth instruction indicates that an operating time period of the first communication chip is a fifth time slice, the fifth time slice and a sixth time slice do not overlap each other, and the sixth time slice is an operating time period of the second communication chip;
when the first communication solution is switching the operating frequency band of the first communication chip, sending, by the arbitration module, a fifteenth instruction to the first communication chip, wherein the fifteenth instruction indicates the first communication chip to switch the operating frequency band; or
when the first communication solution is switching the operating frequency band of the second communication chip, and the arbitration module is not the second communication chip, sending, by the arbitration module, a sixteenth instruction to the second communication chip, wherein the sixteenth instruction indicates the second communication chip to switch the operating frequency band.

28. The method according to claim 24, wherein indicating the first communication chip and/or the second communication chip to operate based on the first communication solution comprises:
when the first communication solution is adjusting the operating status of the first communication chip to the non-communication state, sending, by the arbitration module, a seventeenth instruction to the first communication chip, wherein the seventeenth instruction indicates the first communication chip to switch the operating status to the sleep state;
when the first communication solution is adjusting the operating status of the second communication chip to the non-communication state, sending, by the arbitration module, an eighteenth instruction to the second communication chip, wherein the eighteenth instruction indicates the second communication chip to switch the operating status to the sleep state;
when the first communication solution is reducing the transmit power of the second communication chip, sending, by the arbitration module, a nineteenth instruction to the second communication chip, wherein the nineteenth instruction indicates the second communication chip to reduce the transmit power;
when the first communication solution is the first communication chip and the second communication chip performing communication processes based on the time division strategy, sending, by the arbitration module, a twentieth instruction to the first communication chip, and sending, by the arbitration module, a twenty-first instruction to the second communication chip, wherein the twentieth instruction indicates that an operating time period of the first communication chip is a seventh time slice, the twenty-first instruction indicates that an operating time period of the second communication chip is an eighth time slice, and the seventh time slice and the eighth time slice do not overlap each other;
when the first communication solution is switching the operating frequency band of the first communication chip, sending, by the arbitration module, a twenty-second instruction to the first communication chip, wherein the twenty-second instruction indicates the first communication chip to switch the operating frequency band; or
when the first communication solution is switching the operating frequency band of the second communication chip, sending, by the arbitration module, a twenty-third instruction to the second communication chip, wherein the twenty-third instruction indicates the second communication chip to switch the operating frequency band.

29. An electronic device, comprising a transceiver, a processor, and a memory, wherein the memory is configured to store a computer program, and the processor invokes the computer program to perform the method according to any one of claims 12 to 28.

30. A computer storage medium, wherein the computer storage medium stores a computer program, and when the computer program is executed by a processor, the method according to any one of claims 12 to 28 is implemented.
